# EUROPÄISCHE PATENTSCHRIFT

(11) **EP 0 761 001 B1**
(45) Veröffentlichungstag und Bekanntmachung des Hinweises auf die Patenterteilung: **22.07.1998**
(21) Anmeldenummer: 95920729.1
(22) Anmeldetag: 19.05.1995
(51) Int. Cl.: G11B 17/22

(54) **WIEDERGABE- UND/ODER AUFZEICHNUNGS- UND/ODER AUSGABEGERÄT FÜR ALS INFORMATIONSTRÄGER AUSGEBILDETE PLATTEN**
PLAYING AND/OR RECORDING AND/OR ISSUING DEVICE FOR INFORMATION-BEARING DISCS
SYSTEME DE RESTITUTION ET/OU D'ENREGISTREMENT ET/OU DE SORTIE POUR DISQUES SUPPORTS DE DONNEES

(30) Priorität: 24.05.1994 DE 4418116
(43) Veröffentlichungstag der Anmeldung: 12.03.1997
(60) Teilanmeldung: 97118125.0
(73) Patentinhaber: NSM AKTIENGESELLSCHAFT, 55411 Bingen (DE)
(72) Erfinder: MENKE, Wilhelm, D-55411 Bingen (DE); HEIDERSBERGER, Börge, D-55411 Bingen (DE); PITZ, Ulrich, D-55411 Bingen (DE)
(74) Vertreter: Becker, Bernd, Dipl.-Ing.
(86) Internationale Anmeldenummer: DE9500688
(87) Internationale Veröffentlichungsnummer: WO9532502

(56) Entgegenhaltungen:
- EP-A- 0 587 124
- WO-A-90/04845
- WO-A-92/13343
- WO-A-93/11535
- DE-A- 4 319 551

## Beschreibung

Die Erfindung bezieht sich auf ein Wiedergabe- und/oder Aufzeichnungs- und/oder Ausgabegerät für als Informationsträger ausgebildete Platten, insbesondere CD-Platten.

Aus der EP 0 138 005 B1 ist eine Plattenwechselvorrichtung bekannt, bei der zwischen zwei vertikalen, Plattenhüllen mit Platten speichernden Plattenmagazinen eine vertikal verfahrbare Plattenentnahmevorrichtung angeordnet ist, die einen auf dieser horizontal verfahrbaren Plattenhüllengreifer trägt. Dieser Plattenhüllengreifer ist mit zwei Greifeinrichtungen versehen, von denen sich wahlweise eine in ihrer Bereitschaftsposition in dem linken oder rechten Plattenmagazin befindet, während die andere Greifeinrichtung eine entnommene Plattenhülle in der Mittenposition hält, in der sich die Platte oberhalb des Plattentellers des Abspielgerätes befindet. Sonach kann immer nur eine Greifeinrichtung des Plattenhüllengreifers eine Bereitschaftsposition zur Herausnahme einer Plattenhülle aus dem zugeordneten Plattenmagazin einnehmen, d.h. wenn eine Plattenhülle aus dem anderen Plattenmagazin entnommen werden soll, dann muß zunächst der Plattenhüllengreifer in Richtung dieses Plattenmagazins verfahren werden, um die andere Greifeinrichtung in eine Bereitschaftsposition zur Herausnahme einer Plattenhülle aus dem ihr zugeordneten Plattenmagazin zu bringen, was einen zusätzlichen Verfahrweg des Plattenhüllengreifers darstellt, der die Transportzeit der die gewünschte Platte enthaltenden Plattenhülle von dem Plattenmagazin zu dem Plattenteller der Abspieleinheit erhöht.

Weiterhin offenbart die EP 0 280 263 A2 ein Plattenabspielgerät, bei dem die Platten in zwei Stapeln abgelegt werden und in zwei Abspielstationen abgespielt werden können. Die einzelnen Platten können von zwei Seiten abgespielt werden. Sie werden nach dem Abspielen nicht mehr in denselben Stapel zurückgelegt. Bei diesem Gerät ist ein unendliches Förderband als Auszugeinrichtung ausgebildet. Damit kann eine Platte ohne Wartezeit aus einem der beiden Magazine entnommen werden. Die Stellung der Auszugeinrichtung kann bei diesem Gerät nicht zur Kontrolle der Plattenposition herangezogen werden. Bei geringsten Unregelmäßigkeiten im Transport der Platten, beispielsweise bei der Abgabe der Platten aus dem Abspielgerät oder durch Erschütterungen der Anlage, sind daher empfindliche Störungen des Betriebes zu erwarten, die nicht hingenommen werden können.

Ferner zeigt die EP 0 439 483 B1 ein Plattenabspielgerät mit zwei einander gegenüberliegenden Plattenmagazinen mit einer in Stapelrichtung der Plattenmagazine bewegbaren Transporteinrichtung zur Hin- und Herbeförderung eines Plattenhalters mit einer Platte zwischen den Plattenmagazinen und einer Abspieleinheit und mit zwei unabhängig voneinander steuerbaren, auf der Transporteinrichtung horizontal verfahrbaren Auszugeinrichtungen mit jeweils einem ein- und ausfahrbaren Greifarm. Die unabhängig voneinander verfahrbaren Auszugeinrichtungen befinden sich jeweils in einer Bereitschaftsposition zur Herausnahme eines in dem zugeordneten Plattenmagazin vorhandenen Plattenhalters für eine Platte, oder die eine Auszugeinrichtung ist in eine Mittenposition gefahren, in der sie die aus dem zugehörigen Plattenmagazin entnommene Platte mit dem Plattenhalter konzentrisch zu dem Plattenteller der Abspieleinheit fixiert, während die andere Auszugeinrichtung in ihre Bereitschaftsposition für das andere Plattenmagazin verbleibt. Hieraus resultiert zwar ein relativ kurzer Beförderungsweg für eine einzelne Platte bzw. den zugehörigen Plattenhalter, jedoch muß beim Durchwechseln eines Plattenhalters von einem Plattenmagazin zum anderen Plattenmagazin die den Plattenhalter in die Mittenposition gebrachte Auszugeinrichtung in ihre Bereitschaftsposition zurückgefahren und die andere Auszugeinrichtung in die Mittenposition gefahren werden, welche dann erst den Plattenhalter in das andere Magazin befördern kann. Dies bedingt einen entsprechenden Zeitverlust.

Schließlich offenbart die WO-A-93/11 535 ein Wiedergabe- und/oder Aufzeichnungs- und/oder Ausgabegerät für als Informationsträger ausgebildete Platten, das zwei Plattenmagazine für Plattenhalter, eine Transporteinrichtung mit zwei horizontal verfahrbaren Auszugseinrichtungen, ein Laufwerk und ein Platten-Lade/Ausgabe-Schubfach enthält. Die Auszugseinrichtungen können jeweils wahlweise sowohl in der Bereitschaftsposition als auch in der Transporteinrichtungsposition in eine Eingriffsposition mit dem Plattenhalter gebracht werden.

Der Erfindung liegt die Aufgabe zugrunde, ein Wiedergabe- und/oder Aufzeichnungs- und/oder Ausgabegerät für als Informationsträger ausgebildete Platten der eingangs genannten Art zu schaffen, das bei einem einfachen und kompakten Aufbau äußerst kurze Verfahrwege der Auszugeinrichtungen für sämtliche möglichen Beförderungswege eines Plattenhalters mit einer Platte gewährleistet.

Diese Aufgabe wird erfindungsgemäß bei einem Wiedergabe- und/oder Aufzeichnungs- und/oder Ausgabegerät für als Informationsträger ausgebildete Platten, insbesondere CD-Platten, mit
- gegenüberliegenden Plattenmagazinen, die in horizontal übereinanderliegenen Aufnahmefächern Plattenhalter für mindestens eine Platte aufnehmen,
- einer zwischen den Plattenmagazinen angeordneten, rechnergesteuerten Transporteinrichtung zur wahlweisen Hin- und Herbeförderung eines einzelnen Plattenhalters mit der Platte zwischen beliebigen Aufnahmefächern, zwischen einem Aufnahmefach und mindestens einem Laufwerk zum Auslesen oder Einschreiben von Informationen von der bzw. auf die Platte oder zwischen einem Aufnahmefach oder einem Laufwerk und einem Platten-Lade/Ausgabe-Schubfach, und
- zwei auf der Transporteinrichtung horizontal verfahrbaren Auszugeinrichtungen für die Plattenhalter, wobei
- die Auszugeinrichtungen gleichzeitig relativ zueinander gegenläufig sich kreuzend zwischen einer Bereitschaftsposition und einer Transporteinrichtungsposition verfahrbar sind, wobei
- in der Bereitschaftsposition je eine Auszugeinrichtung benachbart zu je einem Plattenmagazin positioniert ist, und die Auszugeinrichtungen jeweils in eine Eingriffsposition mit einem Plattenhalter zur Herausnahme des Plattenhalters aus dem jeweiligen Plattenmagazin gebracht werden können, und wobei
- in der Transporteinrichtungsposition die beiden Auszugeinrichtungen benachbart zu dem im Vergleich zur Bereitschaftsposition gegenüberliegenden Plattenmagazin positioniert sind, und die Auszugeinrichtungen jeweils in eine Eingriffsposition mit dem in der Transporteinrichtung positionierten Plattenhalter gebracht werden können, um dabei den Plattenhalter von der Transporteinrichtung in das jeweils ursprünglich benachbarte Plattenmagazin zu überführen.

Das erfindungsgemäße Gerät ist sonach mit zwei abhängig voneinander steuerbaren Auszugeinrichtungen für die Plattenhalter versehen, die in der Horizontalen eine gegenläufige symmetrische Bewegung zwischen der Bereitschaftsposition und der Transporteinrichtungsposition ausführen können, d.h. beide Auszugeinrichtungen nehmen als Endposition entweder die Bereitschaftsposition oder die Transporteinrichtungsposition ein, in denen jeweils wahlweise die eine oder die andere Auszugeinrichtung in einen Eingriff mit dem Plattenhalter überführt werden kann. Hieraus resultiert eine weg- und zeitoptimierter Transport des Plattenhalters und damit der Platte innerhalb des Gerätes und zwar für jeden möglichen Beförderungsweg des Plattenhalters. Darüber hinaus weist das Gerät aufgrund der abhängigen Steuerung der Auszugeinrichtungen eine verhältnismäßig kleine Baugröße auf.

Zur einfachen Realisierung der gegenläufigen sich kreuzenden Bewegung der Auszugeinrichtungen umfaßt nach einer vorteilhaften Ausgestaltung der Erfindung jede Auszugeinrichtung einen gleitbeweglich auf einer horizontalen Tragstange geführten, mit einem ein- und ausfahrbaren Greifschieber für einen Plattenhalter versehenen Schlitten, wobei der eine Schlitten an dem Vordertrum und der andere Schlitten an dem Hintertrum eines mit einem drehrichtungsumkehrbaren Antriebsmotor gekoppelten Riementriebs oder dergleichen befestigt ist.

Um eine schnelle Übergabe eines Plattenhalters von einem Plattenmagazin zum anderen Plattenmagazin zu erhalten, laufen bevorzugt beim Durchwechseln eines Plattenhalters von einem Plattenmagazin zum gegenüberliegenden Plattenmagazin folgende Schritte nacheinander ab:
- Eine der den Plattenmagazinen zugeordnete Auszugeinrichtung wird mit dem Plattenhalter in Eingriff gebracht,
- diese erste Auszugeinrichtung befördert den Plattenhalter in die Transporteinrichtung, wobei am Ende der Transportbewegung die erste Auszugeinrichtung und die andere zweite Auszugeinrichtung die nicht mit dem Plattenhalter in Eingriff stehende Transporteinrichtungsposition einnehmen,
- die zweite Auszugeinrichtung wird dann mit dem Plattenhalter in Eingriff gebracht und
- die zweite Auszugeinrichtung befördert nun den Plattenhalter aus der Transporteinrichtung in das andere Plattenmagazin, wobei am Ende der Transportbewegung beide Auszugeinrichtungen eine nicht mit einem Plattenhalter des zugehörigen Plattenmagazins in Eingriff stehende Bereitschaftsposition einnehmen.

Alternativ ist es auch möglich, folgende Schritte beim Durchwechseln eines Plattenhalters von einem Plattenmagazin zum gegenüberliegenden Plattenmagazin nacheinander ablaufen zu lassen:
- Eine der den Plattenmagaszinen zugeordnete Auszugeinrichtung wird mit dem Plattenhalter in Eingriff gebracht,
- diese erste Auszugeinrichtung befördert den Plattenhalter in die Transporteinrichtung, wobei am Ende der Transportbewegung die erste Auszugeinrichtung ihre Eingriffsposition behält und die andere, zweite Auszugeinrichtung eine nicht mit dem Plattenhalter in Eingriff stehende Transporteinrichtungsposition einnimmt,
- die zweite Auszugeinrichtung wird dann mit dem Plattenhalter in Eingriff gebracht,
- die erste Auszugeinrichtung wird nun mit dem Plattenhalter außer Eingriff gebracht und
- die zweite Auszugeinrichtung befördert anschließend den Plattenhalter aus der Transporteinrichtung in das andere Plattenmagazin, wobei am Ende der Transportbewegung beide Auszugeinrichtungen eine nicht mit einem Plattenhalter des zugehörigen Plattenmagazins in Eingriff stehende Bereitschaftsposition einnehmen. In diesem Falle bleibt also beim Durchwechselvorgang der Plattenhalter stets mit einer der Auszugeinrichtungen in Eingriff, wodurch ein Verlust des Eingriffs durch eine Störung der Steuerung während des Durchwechselvorganges praktisch ausgeschlossen ist.

Zur Erreichung einer in sich stabilen Führung der Transporteinrichtung ist nach einer Weiterbildung der Erfindung die Transporteinrichtung auf zwei parallel zueinander und vertikal verlaufenden Führungsstangen gleitbeweglich gelagert und über einen Riementrieb mit drehrichtungsumkehrbarem Antriebsmotor auf- und abwärts bewegbar. Selbstverständlich kann anstelle des Riementriebs auch ein Seilzug-, Spindelantrieb oder dergleichen zur Anwendung kommen. Zweckmäßigerweise ist der Transporteinrichtung ein Sensor zur Feststellung ihrer unteren Ausgangsstellung zugeordnet. Weiterhin ist der Transporteinrichtung bevorzugt ein Sensor zur Überwachung des tatsächlichen Vorhandenseins einer Platte in dem in der Transporteinrichtung befindlichen Plattenhalter zugeordnet.

Um einen konstruktiv einfachen Antrieb für die gegenläufige Bewegung der Schlitten der Auszugeinrichtungen zu erhalten, ist nach einer Ausgestaltung der Erfindung eine der Führungsstangen der Transporteinrichtung drehbeweglich gelagert, und diese Führungsstange ist zur Umwandlung ihrer Drehbewegung in eine Verschiebebewegung der Schlitten zum einen über ein auf ihr verschiebbares, drehfestes Zahnrad mit dem Zahnriemen des an die Schlitten gekoppelten Riementriebs und zum anderen über einen weiteren Riementrieb mit dem Antriebsmotor für die Schlitten verbunden. Für die Kontrolle der Stellung der Auszugeinrichtungen auf der Transporteinrichtung ist bevorzugt die drehbewegliche Führungsstange über einen weiteren Riementrieb mit einer rotierbaren Kodescheibe verbunden, die mit Positionsimpulse erzeugenden Sensoren zur Feststellung der Position der Auszugeinrichtungen zusammenwirkt. Hierbei sind der Kodescheibe mindestens zwei Sensoren zur Feststellung der Bereitschaftsposition und der Transporteinrichtungsposition der Auszugeinrichtungen zugeordnet.

Bei einer besonders vorteilhaften Ausgestaltung der Auszugeinrichtungen ist den Greifschiebern der Schlitten eine umschaltbare Kulissensteuerung derart zugeordnet, daß bei einer gegenläufigen Bewegung der Schlitten aus der Bereitschaftsposition, in der die Greifschieber in ihrer eingefahrenen Stellung jeweils einer Ausnehmung eines Plattenhalters in den gegenüberliegenden Plattenmagazinen gegenüberstehen, oder aus der Transporteinrichtungsposition, in der die Greifschieber in ihrer eingefahrenen Stellung jeweils eine Ausnehmung in einem in die Transporteinrichtung beförderten Plattenhalter gegenüberstehen, wahlweise der Greifschieber des einen oder anderen Schlittens zwangsläufig in eine eingreifende Stellung mit dem Plattenhalter übergeht. So ergibt sich eine zuverlässige Betätigung der Greifschieber.

Damit die Greifschieber sich in einer Ebene begegnen können, sind nach einer Weiterbildung des Erfindungsgegenstandes die Greifschieber im vorderen Bereich derart gegensinnig zueinander abgekröpft, daß bei einer gegenläufigen sich kreuzenden Bewegung der Schlitten, in der stets ein Greifschieber in der ausgefahrenen und der andere Greifschieber in der eingefahrenen Stellung ist, die vorderen Bereiche der Greifarme in einer Ebene aneinander vorbeifahren und in gleicher Ebene mit dem Plattenhalter in Eingriff bringbar sind. Zweckmäßigerweise greift hierbei jeder Schlitten mit einer vorspringenden Nase gleitbeweglich in eine Führungsnut ein, die jeweils in einem Einsatzteil eines im Gehäuse der Transporteinrichtung untergebrachten Chassis ausgebildet ist, wobei die gegenüberliegenden Nuten die gleiche Ebene der Greifschieber bestimmen.

Für eine zuverläsisge Hin- und Herbewegung der Schlitten und für eine gleichzeitige zuverlässige Aus- und Einfahrbewegung der Greifschieber ist bei einer weiteren Ausgestaltung der Erfindung jeweils ein Schlitten auf einer von zwei in einer Ebene übereinanderliegenden Tragstange gelagert, und endseitig an den Greifschiebern des oberen und unteren Schlittens ist jeweils ein in einem Langloch des zugehörigen Schlittens gleitbeweglich geführter Zapfen befestigt, wobei der Zapfen des Greifschiebers des oberen Schlittens mit einer verstellbaren oberen Leitschiene sowie endseitig dazu ortsfest angeordneten Rampen und der Zapfen des Greifschiebers des unteren Schlittens mit einer verstellbaren unteren Leitschiene sowie endseitig dazu ortsfest angeordneten Rampen zusammenwirkt. Bevorzugt bestimmt hierbei die der oberen Leitschiene rechtsseitig zugeordnete Rampe die Bereitschaftsposition des Greifschiebers des oberen Schlittens zur Heausnahme eines Plattenhalters aus dem rechten Plattenmagazin und die der unteren Leitschiene linksseitig zugeordnete Rampe die Bereitschaftsposition des Greifarmes des unteren Schlittens zur Herausnahme eines Plattenhalters aus dem linken Plattenmagazin. Analog hierzu bestimmt die der oberen Leitschiene linksseitig zugeordnete Rampe die Transporteinrichtungsposition eines aus dem rechten Plattenmagazin herausgefahrenen Plattenhalters in der Transporteinrichtung und die der unteren Leitschiene rechtsseitig zugeordnete Rampe die Transporteinrichtungsposition eines aus dem linken Plattenmagazin herausgefahrenen Plattenhalters in der Transporteinrichtung.

Um eine entsprechend den Erfordernissen der Betätigung der Greifschieber zuverlässige Verstellung der Leitschienen zueinander zu erhalten, sind nach einer vorteilhaften Weiterbildung der Erfindung die obere und die untere Leitschiene über ein angetriebenes Hebelgestänge gleichzeitig parallel zueinander derart verfahrbar, daß entweder die obere oder die untere Leitschiene Durchgangsschlitze zwischen derselben und den zugehörigen Rampen für den Zapfen des Greifschiebers des oberen bzw. des unteren Schlittens freigibt.

Nach einer weiteren Ausgestaltung der Erfindung umfaßt das mit den Leitschienen verbundene Hebelgestänge einen oberen, mit der oberen Leitschiene verbundenen Hebeltrieb und einen unteren, mit der unteren Leitschiene verbundenen Hebeltrieb, die beide derart mit einem gemeinsamen Umschalthebel verbunden sind, daß bei einer Betätigung des Umschalthebels die Leitschienen eine begrenzte gegenläufige Parallel-Bewegung ausführen.

Bevorzugt sind die Durchgangsschlitze derart ausgebildet, daß sie durch entsprechende Führung des Zapfens des Greifarmes des zugehörigen Schlittens in Abhängigkeit von der Bewegungsrichtung des Riementriebes der Schlitten den Greifarm in eine Eingriffsposition oder in eine Nicht-Eingriffsposition mit dem Plattenhalter überleiten.

Ferner gleitet bevorzugt in der Eingriffsposition des Greifschiebers des oberen Schlittens bei einer Bewegung des Riementriebes der Schlitten der Zapfen dieses Greifschiebers an der Innenseite der oberen Leitschiene und gleichzeitig der Zapfen des sich nicht in der Eingriffsposition befindlichen Greifschiebers des unteren Schlittens an der Außenseite der unteren Leitschiene entlang. Alternativ hierzu gleitet bevorzugt in der Eingriffsposition des Greifschiebers des unteren Schlittens bei einer Bewegung des Riementriebes der Schlitten der Zapfen dieses Greifschiebers an der Innenseite der unteren Leitschiene und gleichzeitig der Zapfen des nicht in der Eingriffsposition befindlichen Greifschiebers des oberen Schlitten an der Außenseite der oberen Leitschiene entlang.

Zur einfachen Betätigung des Umschalthebels ist nach einer Weiterbildung des Erfindungsgegenstandes der Umschalthebel drehfest und verschiebbar auf der anderen, ebenfalls drehbeweglich gelagerten Führungsstange der Transporteinrichtung angeordnet, wobei diese Führungsstange über einen Elektromagneten und eine Rückholfeder, die mit einem auf der Führungsstange drehfest angeordneten Klemmring zusammenwirken, oder über einen drehrichtungsumkehrbaren Antriebsmotor in unterschiedliche Drehrichtungen beaufschlagbar. Zweckmäßigerweise sind der den Umschalthebel aufnehmenden Führungsstange Sensoren zur Überwachung der Drehrichtungsendstellungen der Führungsstange zugeordnet.

Weiterhin ist bevorzugt vorgesehen, daß das Gehäuse der Transporteinrichtung einen Tragarm aufweist, wobei in den aus gleitfähigem Kunststoff bestehenden Einsatzteilen des im Gehäuse angeordneten Metall-Chassis eine Führungsschiene für den Plattenhalter ausgebildet ist, und dieser Führungsschiene außenseitig am Tragarm eine aus gleitfähigem Kunststoff bestehende weitere Führungsschiene für den Plattenhalter gegenüberliegt. Zur sicheren Fixierung eines Plattenhalters in der Transporteinrichtung ist zweckmäßigerweise der außenseitigen Führungsschiene des Tragarms mittig ein Federelement zugeordnet, das den Plattenhalter durch Einrastung in einen entsprechenden Einschnitt des Plattenhalters in der Transporteinrichtung zentriert.

Um die Transporteinrichtung ohne elektrische Aktoren, Schleppkabel oder dergleichen betätigen zu können, erfolgt die Betätigung der in der Transporteinrichtung befindlichen Steuermechanismen für die Schlitten und die Greifschieber ohne elektrische Antriebselemente innerhalb der Transporteinrichtung.

Um bei einer möglichen Schwenklage des Plattenmagazins, beispielsweise bei einem Transport desselben, ein Herausfallen der Plattenhalter aus dem Plattenmagazin zu verhindern, ist bei einer vorteilhaften Ausgestaltung der erfindungsgemäßen Lösung jeder Plattenhalter durch zwei gegenüberliegende, am Plattenmagazin angebrachte Federelemente in einer gesicherten Lage im Aufnahmefach positioniert, in der der Plattenhalter über eine entsprechende Freimachung in der Seitenwand des zugehörigen Plattenmagazins von der zugehörigen Auszugeinrichtung der Transporteinrichtung erfaßbar ist. Zur Erhöung der Lagesicherung der Platten in den Plattenhaltern innerhalb der Plattenmagazine ist zweckmäßigerweise vorgesehen, daß der Freiraum zwischen den Plattenhaltern in jedem Plattenmagazin kleiner als die Dicke einer Platte ist. Hierdurch ist praktisch ein Herausgleiten der Platten aus den Plattenhaltern nicht möglich. Zwecks Erzielung eines kompakten Plattenmagazins ist weiterhin bevorzugt die Dicke eines jeden Plattenhalters nur geringfügig größer als die Dicke einer Platte.

Damit der Plattenhalter auf einfache Weise von den Auszugeinrichtungen der Transporteinrichtung erfaßbar ist, besitzt nach einer vorteilhaften Ausgestaltung der Erfindung der Plattenhalter an seinen Längsseiten jeweils im vorderen Bereich eine Ausnehmung und entsprechend der Lage des Plattenhalters im Aufnahmefach des jeweiligen Plattenmagazins bzw. in der Transporteinrichtung ist der Greifarm der entsprechenden Auszugeinrichtung mit einer dieser Ausnehmungen in Eingriff bringbar. Weiterhin sind bevorzugt in der Bodenwand und der Deckenwand eines jeden Plattenmagazins Einschnitte vorgesehen, die mit den entsprechenden Ausnehmungen der Plattenhalter in dem Plattenmagazin fluchten. Dies ermöglicht es, bei mehreren übereinanderliegenden Plattenmagazinen mit dem Greifschieber der zugehörigen Auszugeinrichtung durch diese in vertikaler Richtung durchzufahren.

Um ein zeitlich unmittelbares Abspielen von Platten hintereinander, wie es z.B. in Diskotheken gefordert wird, oder den Zugriff mehrerer Benutzer auf die Platten, die auch als CD-ROM-Platten ausgebildet sein können, zu ermöglichen, sind zweckmäßigerweise mehrere Laufwerke in der Vertikalachse eines der Plattenmagazine übereinanderliegend auswechselbar angeordnet. Des weiteren ist es möglich, unterhalb der Transporteinrichtung ein Laufwerk oder unterhalb der Transporteinrichtung einLaufwerk und in der Vertikalachse eines der Plattenmagazine mehrere Laufwerke anzuordnen. Auch kann eines der gegenüberliegenden Plattenmagazine vollständig durch einen Turm übereinanderliegender Laufwerke ersetzt werden. Hierbei kann gegebenenfalls unterhalb der Transporteinrichtung ein weiteres Laufwerk angeordnet sein.

Nach einer weiteren vorteilhaften Weiterbildung des Erfindungsgegenstandes ist das Platten-Lade/Ausgabe-Schubfach in der Vertikalachse eines der Plattenmagazine auswechselbar angeordnet, und diesem ist ein Ein/Ausgabeschacht für einen Plattenhalter mit einer Platte zugeordnet, wobei über das Plattenlade-/Ausgabe-Schubfach mittels der Transporteinrichtung entweder ein Plattenhalter mit der Platte zu einem der Laufwerke oder zu einem freien Aufnahmefach in einem der Plattenmagazine befördert oder eine in einem Plattenmagazin vorhandene Platte gegen eine andere Platte ausgetauscht werden kann. Zweckmäßigerweise bleibt hierbei bei einer Ausgabe einer Platte oder einem Austausch einer Platte gegen eine andere Platte mittels des Platten-Lade-/Ausgabe-Schubfaches in der ausgefahrenen Stellung des Platten-Lade-/Ausgabe-Schubfaches der Plattenhalter zwangsweise im Platten-Lade-/Ausgabe-Schubfach.

Zur bedienerfreundlichen Handhabung eines Plattenhalters mit einer darin eingelegten Platte außerhalb des Gerätes ist nach einer Weiterbildung der Erfindung der Plattenhalter mit der Platte innerhalb einer im entsprechend vergrößerten Aufnahmefach des Plattenmagazins abgelegten Kassette angeordnet. Alternativ hierzu ist es auch möglich, mehrere Plattenhalter mit jeweils zugehöriger Platte innerhalb einer Kassette unterzubringen, die in einem entsprechend vergrößerten Aufnahmefach des Plattenmagazins abgelegt wird.

Um einen einfachen und schnellen Zugriff des Rechners auf das Gerät zu ermöglichen, ist bei einer Ausgestaltung der Erfindung der internen Rechnereinheit ein Zwischenspeicher zugeordnet, und ein externer Rechner vorgesehen, wobei die interne Recheneinheit das Gerät steuert und überwacht, den Zwischenspeicher verwaltet und die Kommunikation mit dem externen Rechner durchführt.

Zwecks Erzielung eines äußerst kompakten, einfach aufgebauten Gerätes ist der Transporteinrichtung einseitig nur ein Plattenmagazin zugeordnet und ein Laufwerk entweder in der Vertikalachse dieses Plattenmagazins oder unterhalb der Transporteinrichtung angeordnet, wobei auf der Transporteinrichtung lediglich eine auf dieser horizontal verfahrbaren Auszugeinrichtung vorgesehen ist. Hierdurch ergibt sich eine wesentliche Vereinfachung des Steuerungsmechanismus für die Auszugeinrichtung. Alternativ hierzu ist es auch möglich, der Transporteinrichtung einseitig mehrere übereinanderliegende Plattenmagazine, mehrere übereinanderliegende Laufwerke und ein Platten-Lade-/Ausgabe-Schubfach zuzuordnen.

Der der Erfindung zugrundeliegende Gedanke wird in der nachfolgenden Beschreibung anhand eines Ausführungsbeispieles, das in der Zeichnung dargestellt ist, näher erläutert. Es zeigt:

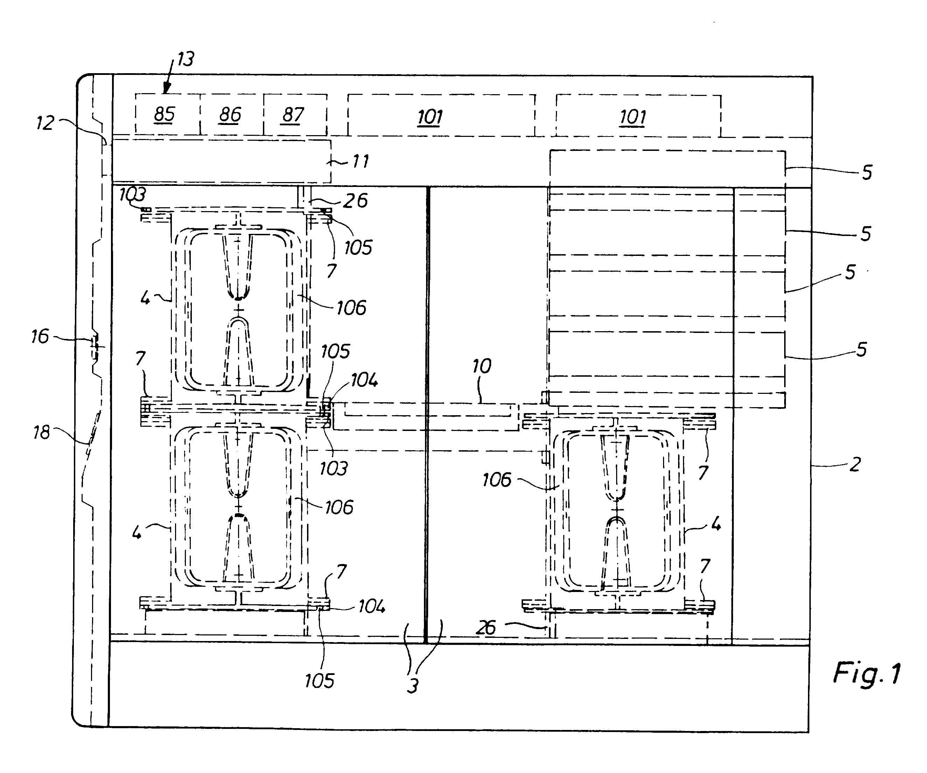

- Fig. 1: eine Vorderansicht eines Wiedergabe-Aufzeichnungs- und Ausgabegerätes für Platten nach der Erfindung,

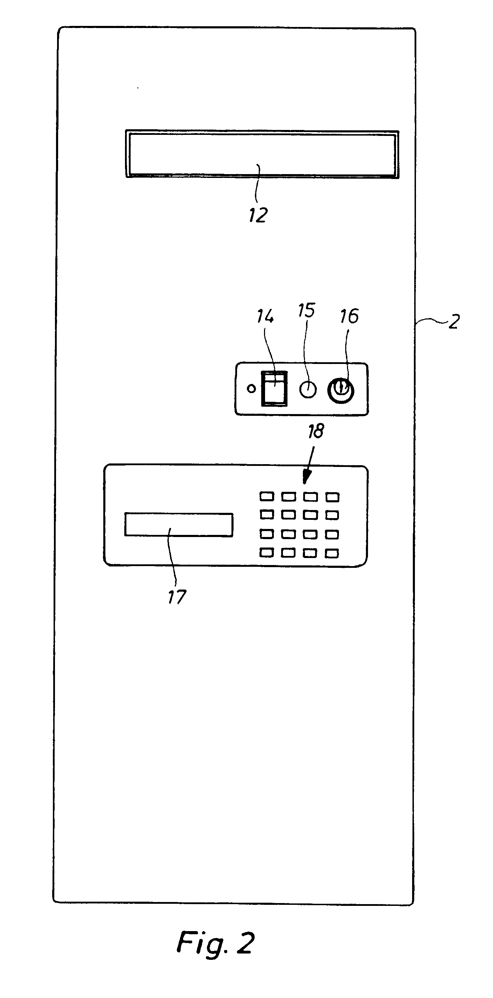

- Fig. 2: eine Seitenansicht des Gerätes nach Fig. 1
- Fig. 3a bis 3c: jeweils einen Querschnitt durch das Gerät nach Fig. 1 mit unterschiedlichen Funktionsstellungen der Auszugeinrichtungen der Transporteinrichtung für einen Plattenhalter,

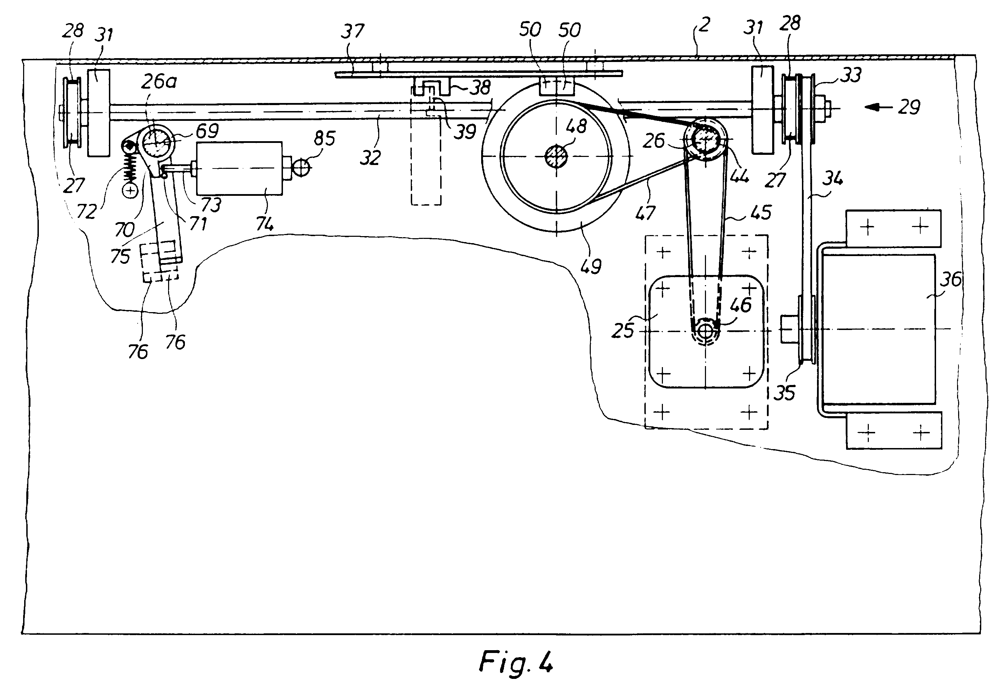

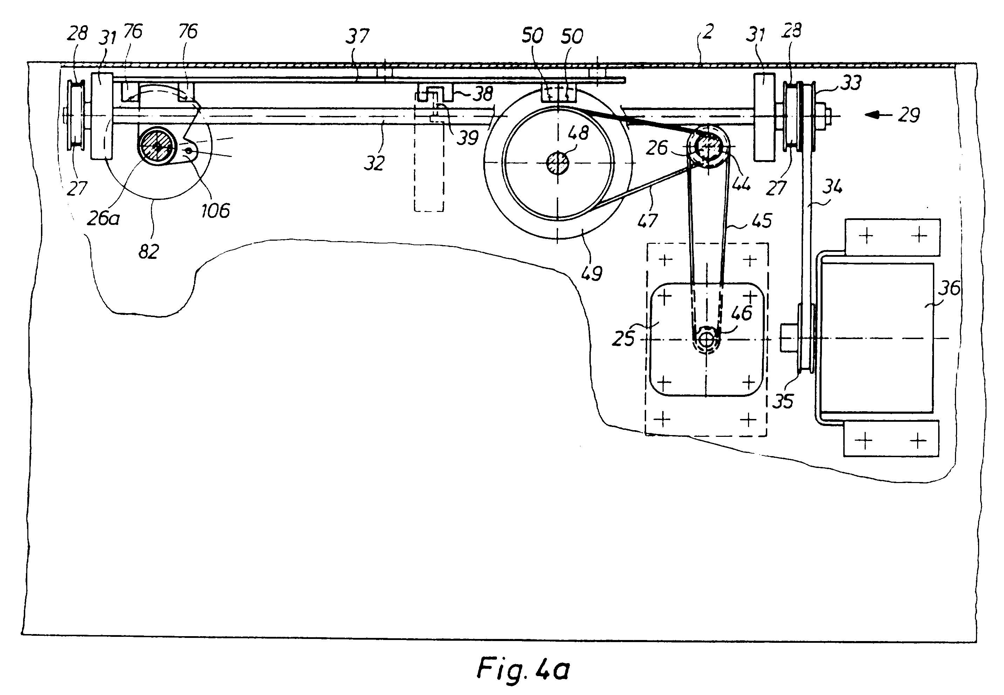

- Fig. 4: eine teilweise aufgeschnittene Unteransicht des Gerätes nach Fig. 1,
- Fig. 4a: eine alternative Ausführung der Darstellung nach Fig. 4,

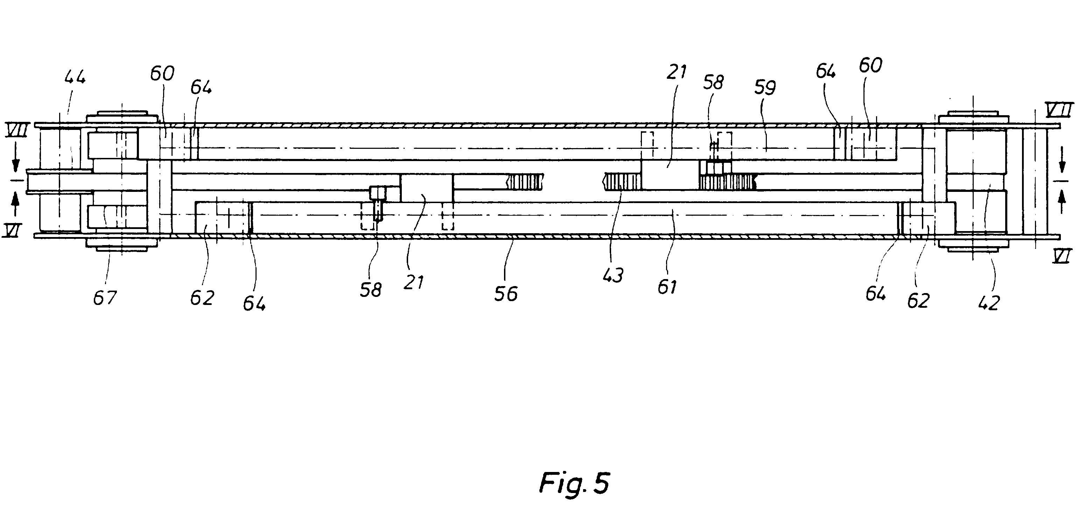

- Fig. 5: eine Rückansicht der Transporteinrichtung der Darstellung nach Fig. 3a, jedoch mit anderer Funktionsstellung der Auszugeinrichtungen,

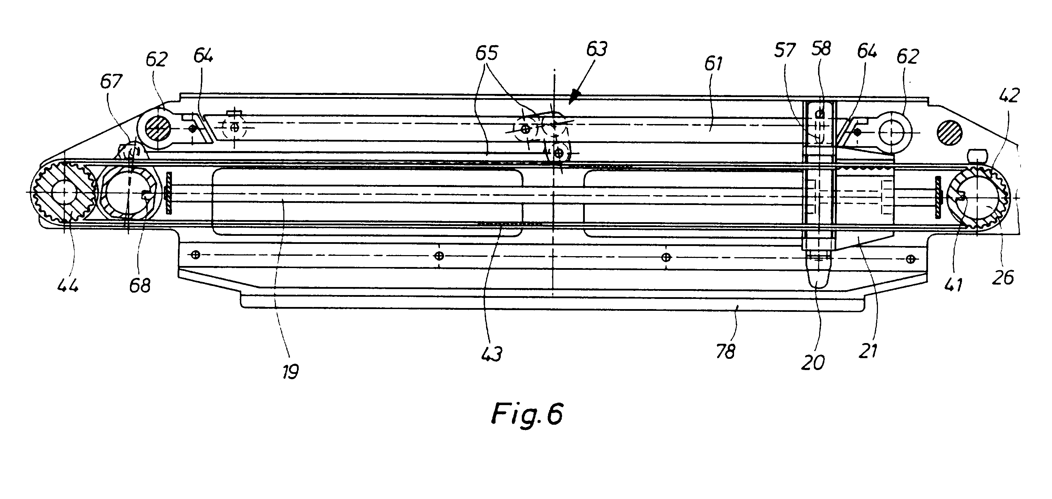

- Fig. 6: einen Schnitt durch die Darstellung nach Fig. 5 gemäß der Linie VI-VI, jedoch in anderer Funktionsstellung,

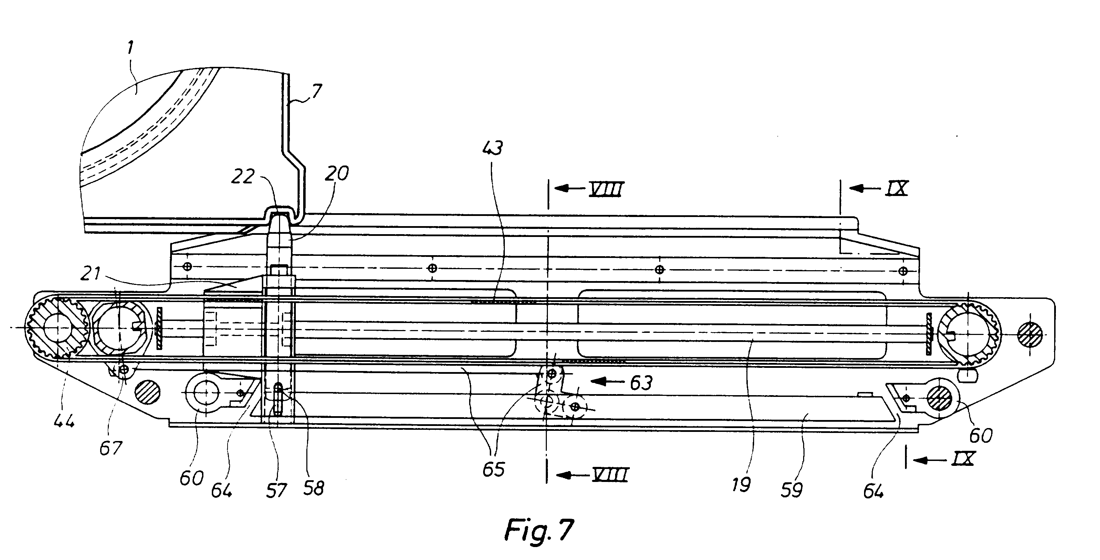

- Fig. 7: einen Schnitt durch die Darstellung nach Fig. 5 gemäß der Linie VII-VII, jedoch in anderer Funktionsstellung der Auszugeinrichtungen,

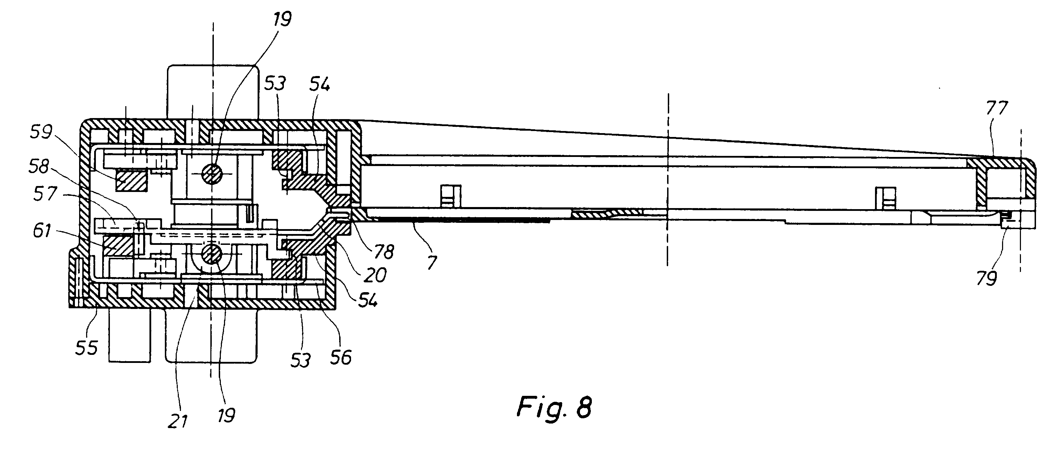

- Fig. 8: einen Schnitt durch die Darstellung nach Fig. 7 gemäß der Linie VIII-VIII,

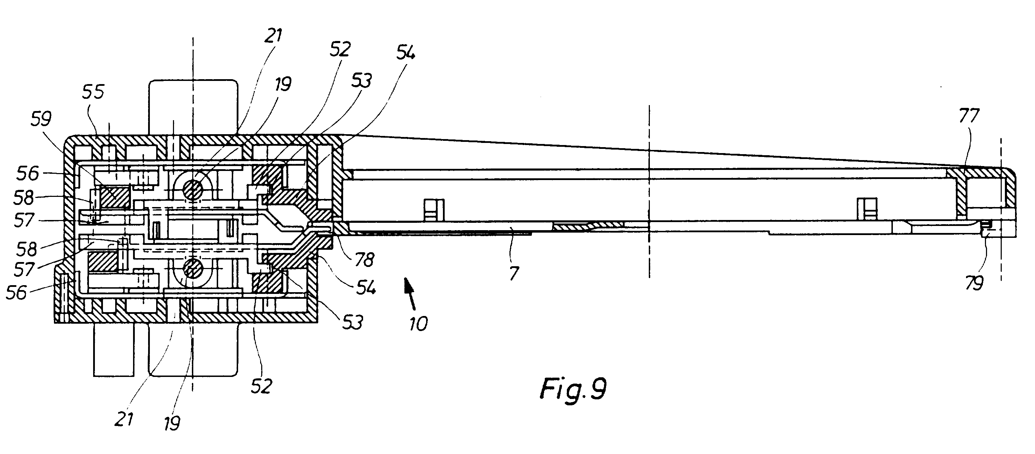

- Fig. 9: einen Schnitt durch die Darstellung nach Fig. 7 gemäß der Linie IX-IX,
- Fig. 10a bis Fig. 10g: Prinzip-Darstellungen der Funktionsstellungen der Auszugeinrichtungen der Transporteinrichtung beim Durchwechseln eines Plattenhalters mit einer Platte vom rechten Plattenmagazin zum linken Plattenmagazin,
- Fig. 11a bis 11e: Prinzip-Darstellungen alternativer Funktionsstellungen der Auszugeinrichtungen der Transporteinrichtung beim Durchwechseln eines Plattenhalters mit einer Platte vom rechten Plattenmagazin zum linken Plattenmagazin,

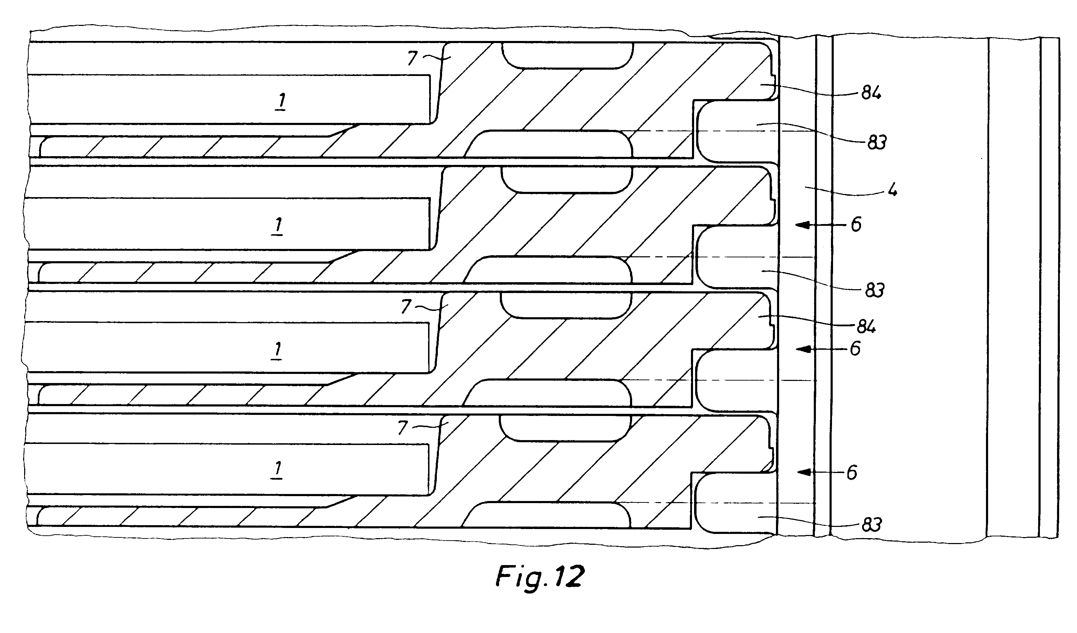

- Fig. 12: einen vergrößerten Teilschnitt durch ein Plattenmagazin der Fig. 1,
- Fig. 13 bis 15: alternative Ausführungen des Gerätes nach Fig. 1,
- Fig. 16: eine Vorderansicht einer einen Plattenhalter mit eingelegter Platte aufnehmenden Kassette,
- Fig. 17: eine Vorderansicht einer mehrere Plattenhalter mit jeweils eingelegter Platte aufnehmenden Kassette,

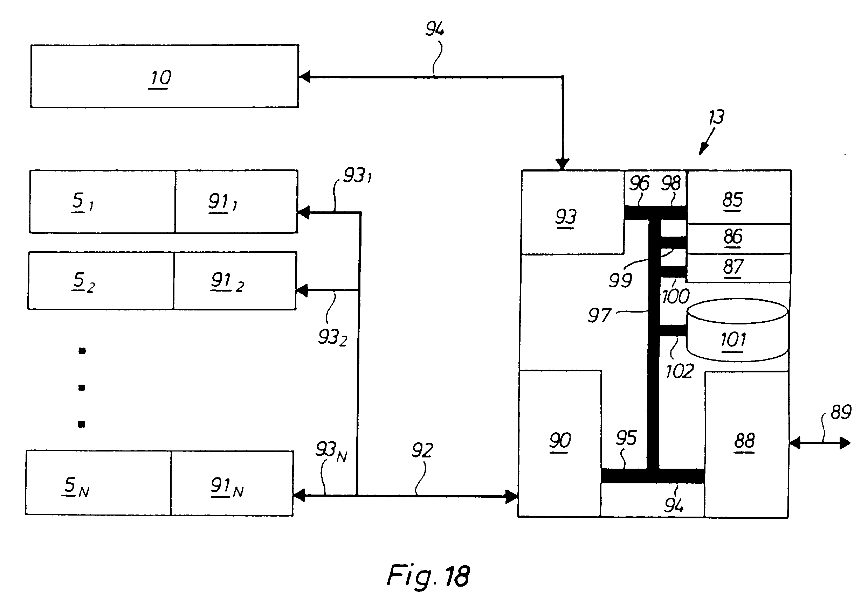

- Fig. 18: ein Blockschaltbild zur Steuerung des Gerätes nach Fig. 1,
- Fig. 19: eine alternative Ausführung des Gerätes nach Fig. 1 mit nur einem der Transporteinrichtung seitlich zugeordneten Plattenmagazin und einem unterhalb der Transporteinrichtung angebrachten Laufwerk und
- Fig. 20 und 21: alternative Ausführungen der Darstellung nach Fig. 19.

Das Wiedergabe-/Aufzeichnungs- und Ausgabegerät für Platten 1 besitzt ein Gehäuse 2 mit einer an der Vorderseite angebrachten Doppel-Tür 3. Seitlich im unteren Bereich des Gehäuses 2 sind zwei gegenüberliegende Plattenmagazine 4 angeordnet. Oberhalb des linken Plattenmagazins 4 befindet sich ein weiteres auswechselbares Plattenmagazin 4, während oberhalb des rechten Plattenmagazins 4 ein Turm aus vier auswechselbaren Laufwerken 5 vorgesehen ist. Die Laufwerke 5 dienen zum Auslesen oder Einschreiben von Informationen von einer bzw. auf eine Platte 1.

Die untereinander identisch aufgebauten Plattenmagazine 4 weisen jeweils eine Vielzahl übereinanderliegend angeordneter Aufnahmefächer 6 für die Lagerung einer entsprechenden Anzahl an je eine Platte 1 aufnehmender Plattenhalter 7 auf. Jedem Aufnahmefach 6 sind zwei gegenüberliegende Gleitschienen 83 zugeordnet, auf denen der Plattenhalter 7 mit randseitigen Schultern 84 aufliegt. Der Freiraum zwischen den Plattenhaltern 7 ist hierbei kleiner als die Dicke der in den Plattenhalter 7 eingelegten Platte 1. Weiterhin ist die Dicke des Plattenhalters 7 nur geringfügig größer als die Dicke der Platte 1. Die Platte 1 hat eine Dicke von ca. 1,2 mm und der Plattenhalter 7 eine Dicke von etwa 2,8 mm. Dadurch wird eine äußerst geringe Höhe für ein Plattenmagazin 4 mit fünfzig übereinandergestapelten Plattenhaltern 7 erreicht. In dem Aufnahmefach 6 ist der Plattenhalter 7 durch zwei gegenüberliegende am Plattenmagazin 4 angebrachte Federelemente 8 in seiner Lage gesichert. In dieser Lage steht der Plattenhalter 7 durch Freimachung der entsprechenden Seitenwand des Plattenmagazins 4 soweit über der Auszugseite des Plattenmagazins 4 vor, daß er von einer der beiden Auszugeinrichtungen 9 einer in dem Raum zwischen den Plattenmagazinen 4 und den Laufwerken 5 auf- und abverfahrbaren Transporteinrichtung 10 für den eine Platte 1 aufnehmenden Plattenhalter 7 erfaßt werden kann. Oberhalb der beiden linken Plattenmagazine 4 befindet sich ein Platten-Lade-/Ausgabe-Schubfach 11, dem seitlich ein Ein-/Ausgabeschacht 12 für einen Plattenhalter 7 mit einer Platte 1 zugeordnet und das ebenfalls von der Transporteinrichtung 10 bedienbar ist. In der ausgefahrenen Stellung des Platten-Lade-/Ausgabe-Schubfaches verbleibt der Plattenhalter 7 zwangsgesteuert in dem Schubfach 11, d.h. bei einer Ein- oder Ausgabe einer Platte 1 in das Schubfach 11 kann der Plattenhalter 7 nicht aus diesem entnommen werden. Sämtliche Funktionen des Gerätes werden über eine oberhalb des Platten-Lade-/Ausgabe-Schubfaches 11 angeordnete interne Rechnereinheit 13 gesteuert, die mit einem Ein-/Ausschalter 14, einem Türöffner 15, einem Schlüsselschalter 16, einem Display 17 und einem Bedientasten-Tableau 18 verbunden ist.

Der interne Rechner 13 umfaßt eine Zentraleinheit 85, eine BIOS-Einheit 86, ein RAM 87 und eine Schnittstelle 88 zu einem nichtdargestellten externen Rechner, mit dem der interne Rechner 13 kommuniziert, was durch den Doppelpfeil 89 angedeutet ist. Eine weitere Schnittstelle 90 ist für den Anschluß an eine Anzahl von Laufwerken 5₁, 5₂, ... 5_{N}, jeweils mit Schnittstellen 91₁, 91₂, ... 91_{N}, vorgesehen. Die Schnittstelle 90 ist über eine Leitung 92 und Verzweigungsleitungen 93₁, 93₂, ... 93_{N} mit den Schnittstellen 91₁, 91₂, ... 91_{N} verbunden. Der interne Rechner 13 umfaßt ferner eine weitere Schnittstelle 93, über die er mittels einer Leitung 94 an die Transporteinrichtung 10 angeschlossen ist.

Die Schnittstellen 88, 90 93 des internen Rechners 13 stehen über Leitungen 94, 96 sowie eine Leitung 97 und Leitungen 98, 99, 100 mit der Zentraleinheit 85, der BIOS-Einheit 86 und dem RAM 87 in Verbindung. Mit dem internen Rechner 13 integriert ist ein Zwischenspeicher 101, der über eine Leitung 102 mit den entsprechenden Einheiten des internen Rechners 13 verbunden ist. Der Zwischenspeicher 101 kann als Festplatte oder CD-ROM ausgeführt sein. Der interne Rechner 13 steuert und überwacht das gesamte Gerät und führt die Kommunikation mit dem externen Rechner durch. Ferner verwaltet er auch den Zwischenspeicher 101. Nach außen stellt sich die Anzahl der Laufwerke 5₁, 5₂, ... 5_{N} für den externen Rechner als ein einziges Laufwerk mit einem großen, aber zusammenhängenden Inhaltsverzeichnis dar. Für den Zugriff auf die einzelnen Platten 1 muß die Software des externen Rechners lediglich in ein anderes Verzeichnis verzweigen. Die Arbeitgsgänge, wie Plattenwechsel, Datenabruf usw. werden vom internen Rechner 13 durchgeführt, wozu die Transporteinrichtung 10 eingesetzt wird.

Die beiden horizontal auf der Transporteinrichtung 10 verfahrbaren Auszugeinrichtungen 9 sind gleichzeitig relativ zueinander gegenläufig sich kreuzend bewegbar und zwar zwischen einer Bereitschaftsposition zur Herausnahme eines bestimmten Plattenhalters 7 mit der gewünschten Platte 1 aus dem entsprechenden Plattenmagazin 4 bzw. dem entsprechenden Laufwerk 5 bzw. aus dem Platten-Lade-/Ausgabe-Schubfach 11 und einer Transporteinrichtungsposition zur Herausnahme des Plattenhalters 7 aus der Transporteinrichtung 10. Sowohl in der Bereitschaftsposition als auch in der Transporteinrichtungsposition stehen beide Auszugeinrichtungen 9 nicht mit dem Plattenhalter 7 in Eingriff. In diesen Positionen können die Auszugeinrichtungen 9 jedoch jeweils wahlweise in eine Eingriffposition mit dem Plattenhalter 7 gebracht werden. Jede Auszugeinrichtung 9 umfaßt einen gleitbeweglich auf einer horizintalen Tragstange 19 geführten, mit einem ein- und ausfahrbaren Greifschieber 20 für einen Plattenhalter 7 versehenen Schlitten 21. Der Plattenhalter 7 besitzt an seinen Längsseiten jeweils im vorderen Bereich eine Ausnehmung 22, in die entsprechend der Lage des Plattenhalters 7 im Aufnahmefach 6 des jeweiligen Plattenmagazins 4 bzw. in der Transporteinrichtung 10 der Greifschieber 20 des entsprechenden Schlittens 21 eingreifen kann. Mit den Ausnehmungen 22 der in das Plattenmagazin 4 eingesetzten Plattenhalter 7 fluchten in die Deckenwand 103 und in die Bodenwand 104 eingelassene Einschnitte 105. Der dem rechten Plattenmagazin 4 zugeordnete Schlitten 21 ist an dem Vorderturm 23 und der dem linken Plattenmagazin 4 zugeordnete Schlitten 21 an dem Hinterturm 24 eines mit einem drehrichtungsumkehrbaren Antriebsmotor 25 gekoppelten Riementriebs 40 befestigt. Jedes Plattenmagazin 4 ist an der Vorderseite mit einem Tragbügel 106 versehen.

Im hinteren Bereich des Gehäuses 2 befinden sich zwei parallel zueinander und vertikal verlaufende Führungsstangen 26, 26a, auf denen die Transporteinrichtung 10 gleitbeweglich gelagert ist. Jeder Führungsstange 26, 26a ist seitlich ein parallel dazu verlaufender, über Umlenkrollen 27 geführter Riemen 28 eines Riementriebs 29 zugeordnet, wobei jeder Riemen 28 über eine Klemmhalterung 30 mit der Transporteinrichtung 10 verbunden ist. Die unteren Umlenkrollen 27 sind über eine in Lagern 31 aufgenommene Achse 32 miteinander gekoppelt. Die Achse 32 trägt eine weitere Umlenkrolle 33 für einen Riemen 34, der mit dem Antriebsrad 35 eines drehrichtungsumkehrbaren Antriebsmotors 36 verbunden ist. Zur Feststellung der unteren Ausgangssstellung der Transporteinrichtung 10 ist dieser ein auf einer Leiterplatte 37 angeordneter, als Gabelkoppler ausgebildeter Sensor 38 zugeordnet, in den in der unteren Stellung der Transporteinrichtung 10 ein an der Unterseite der Transporteinrichtung angebrachter Steg 39 eingreift. Beide Führungsstangen 26, 26a der Transporteinrichtung 10 sind drehbeweglich gelagert. Auf der rechten Führungsstange 26 ist mittels einer Nut-Feder-Führung 41 ein Zahnrad 42 verschiebbar und drehfest angeordnet, das mit dem Zahnriemen 43 des an die Schlitten 21 gekoppelten Riementreibs 40 verbunden ist. Diesem Zahnrad 42 liegt ein auf der Transporteinrichtung 10 ortsfest gelagertes Zahnrad 44 gegenüber, das als Umlenkrolle für den Zahnriemen 43 dient. Am unteren Ende trägt die rechte Führungsstange 26 ein drehfestes Zahnrad 44 für einen weiteren Riementrieb 45, der mit dem Antriebsrad 46 des drehrichtungsumkehrbaren Antriebsmotors 25 zusammenwirkt. Weiterhin ist die rechte Führungsstange 26 am unteren Ende über einen weiteren Riementrieb 47 mit einer auf einer Achse 48 gelagerten Kodescheibe 49 verbunden, der zwei als Gabelkoppler ausgebildete und auf der Leiterplatte 37 befestigte Sensoren 50 zugeordnet sind. Mit Hilfe dieser Positionsimpulse erzeugenden Sensoren 50 kann die Bereitschaftsposition und die Transporteinrichtungsposition der Schlitten 21 überwacht werden.

Die Ein- und Ausfahrbewegung der Greifschieber 20 der Schlitten 21 wird über eine umschaltbare Kulissensteuerung 51 gesteuert. Die Kulissensteuerung 51 ist so ausgelegt, daß bei einer gegenläufigen Bewegung der Schlitten 21 aus der Bereitschaftsposition oder aus der Transporteinrichtungsposition wahlweise der Greifschieber 20 des rechten oder des linken Schlittens 21 zwangsweise in die Eingriffposition mit dem Plattenhalter 7 übergeht. Die Greifschieber 20 sind im vorderen Bereich gegensinnig zueiander abgekröpft. Aufgrund dieser Abkröpfung können bei einer gegenläufigen sich kreuzenden Bewegung der Schlitten 21, bei der aufgrund der Kulissensteuerung 51 immer ein Greifschieber 20 in der ausgefahrenen Stellung ist, die vorderen Bereiche der Greifschieber 20 in einer Ebene aneinandervorbeifahren, d.h. ein ausgefahrener Greifschieber 20 transportiert mit seinem vorderen Bereich einen Plattenhalter 7, während der vordere Bereich des anderen eingefahrenen Greifschiebers 20 sich gegenläufig hinter dem vorderen Bereich des ausgefahrenen Greifschiebers 20 bewegt. Jeder auf einer von zwei in einer Ebene übereinanderliegenden Tragstangen 19 gelagerte Schlitten 21 greift mit einer an der Vorderseite vorspringenden Nase 52 gleitbeweglich in eine ortsfeste Führungsnut 53 ein, die jeweils in einem Einsatzteil 54 eines im Gehäuse 55 der Transporteinrichtung 10 untergebrachten Chassis 56 ausgebildet ist. Endseitig ist an den Greifschiebern 20 der Schlitten 21 jeweils ein in einem Langloch 57 des zugehörigen Schlittens 21 gleitbeweglich geführter Zapfen 58 zur Begrenzung der Ein- und Ausfahrbewegung des Greifschiebers 20 befestigt. Der Zapfen 58 des Greifschiebers 20 des oberen Schlittens 21 wirkt mit einer verstellbaren oberen Leitschiene 59 sowie endseitig dazu ortsfest angeordneten Rampen 60 zusammen. In analoger Weise steht der Zapfen 58 des Greifschiebers 20 des unteren Schlittens 21 mit einer verstellbaren unteren Leitschiene 61 sowie endseitig dazu ortsfest angeordneten Rampen 62 in Wirkverbindung.

Die der oberen Leitschiene 59 rechtsseitig zugeordnete Rampe 60 bestimmt die Bereitschaftsposition des Greifschiebers 20 des oberen Schlittens 21 zur Herausnahme eines Plattenhalters 7 aus dem rechten Plattenmagazin 4. Entsprechend bestimmt die der unteren Leitschiene 61 linksseitig zugeordnete Rampe 62 die Bereitschaftsposition des Greifschiebers 20 des unteren Schlittens 21 zur Herausnahme eines Plattenhalters 7 aus dem linken Plattenmagazin 4. Weiterhin bestimmt in analoger Weise die der oberen Leitschiene 59 linksseitig zugeordnete Rampe 60 die Transporteinrichtungsposition eines aus dem rechten Plattenmagazin 4 herausgefahrenen Plattenhalters 7 in der Transporteinrichtung und die der unteren Leitschiene 61 rechtsseitig zugeordnete Rampe 62 die Transporteinrichtungsposition eines aus dem linken Plattenmagazin 4 herausgefahrenen Plattenhalters 7 in der Transporteinrichtung 10.

Beide Leitschienen 59, 61 sind über ein angetriebenes Hebelgestänge 63 gleichzeitig parallel zueinander von einer Endposition in die andere verfahrbar, wobei entweder die obere oder die untere Leitschiene 59 bzw. 61 Durchgangsschlitze 64 zwischen derselben und den zugehörigen Rampen 60 bzw. 62 für den Zapfen 58 des oberen bzw. des unteren Schlittens 21 freigibt, d.h. wenn die der oberen Leitschiene 59 zugeordneten Durchgangsschlitze 64 offen sind, dann sind die der unteren Leitschiene 61 zugeordneten Durchgangsschlitze 64 geschlossen oder umgekehrt. Die Durchgangsschlitze 64 sind so ausgebildet, daß sie durch entsprechende Führung des Zapfens 58 des Greifschiebers 20 des zugehörigen Schlittens 21 in Abhängigkeit von der Bewegungsrichtung des Riementriebes 40 der Schlitten 21 den Greifschieber 20 in eine Eingriffposition oder in eine Nicht-Eingriffposition mit dem Plattenhalter 7 überleiten. Hierbei gleitet in der Eingriffposition des Greifschiebers 20 des oberen Schlittens 21 der Zapfen 58 dieses Greifschiebers 20 an der Innenseite der oberen Leitschiene 59 und gleichzeitig der Zapfen 58 des sich nicht in der Eingriffposition befindlichen Greifschiebers 20 des unteren Schlittens 21 an der Außenseite der unteren Leitschiene 61 entlang. Dementsprechend gleitet in der Eingriffposition des Greifschiebers 20 des unteren Schlittens 21 bei einer Bewegung des Riementriebes 40 der Schlitten 21 der Zapfen 58 dieses Greifschiebers 20 an der Innenseite der unteren Leitschiene 61 und gleichzeitig der Zapfen 58 des sich nicht in der Eingriffposition befindlichen Greifschiebers 20 des oberen Schlittens 21 an der Außenseite der oberen Leitschiene 59 entlang.

Das mit dem Leitschienen 59, 61 verbundene Hebelgestänge 63 umfaßt einen oberen, mit der oberen Leitschiene 59 verbundenen Hebeltrieb 65 und einen unteren, mit der unteren Leitschiene 61 verbundenen Hebeltrieb 66. Beide Hebeltriebe 65, 66 sind mit einem gemeinsamen Umschalthebel 67 verbunden, der mittels einer Nut-Feder-Führung 68 drehfest und verschiebbar auf der linken drehbeweglichen Führungsstange 26a der Transporteinrichtung 10 gelagert ist. Am unteren Ende der linken Führungsstange 26a befindet sich ein Klemmring 69 mir einer vorstehenden Nase 70, der ein ortsfester Anschlag 71 zugeordnet ist. Ferner steht der Klemmring 69 mit einer als Zugfeder ausgebildeten Rückhohlfeder 72 in Verbindung. Die Nase 70 des Klemmringes 69 ist durch den Anker 73 eines Elektromagneten 74 beaufschlagt. Dem Anker 73 des Elektromagneten 74 ist auf der anderen Seite ein Anschlag 75 zugeordnet. Mittels des Elektromagneten 74 und der Rückhohlfeder 72 kann die linke Führungsstange 26a in unterschiedlichen Richtungen verdreht werden, wobei eine entsprechende Verschwenkung des Umschalthebels 67 und damit eine begrenzte gegenläufige Parallel-Bewegung der Leitschienen 59, 61 erfolgt. Im Bereich des Klemmringes 69 trägt die linke Führungsstange 26a drehfest einen abgewinkelten Hebel 75, der entsprechend der Stellung des Ankers 73 des Elektromagneten 74 in einen von zwei nebeneinanderliegenden, als Gabelkoppler ausgebildeten Sensoren 76 zur Überwachung der Drehrichtungsendstellungen der linken Führungsstange 26a eingreift. Anstelle des Verdrehantriebs der Führungsstange 26a mittels des Elektromagneten 74 und der Rückhohlfeder 72 kann auch ein Verdrehantrieb verwendet werden, der einen mit der Führungsstange 26a gekoppelten Antriebsmotor 82 umfaßt. In diesem Falle steht die Führungsstange 26a drehfest mit einer Lasche 106 in Verbindung, die entsprechend in die Sensoren 76 eintaucht.

Am Gehäuse 55 der Transporteinrichtung 10 befindet sich ein rechteckförmiger Tragarm 77 zur Aufnahme eines Plattenhalters 7. In den aus gleitfähigem Kunststoff bestehenden Einsatzteilen 54 des Metall-Chassis 56 des Gehäuses 55 der Transporteinrichtung 10 ist eine Führungsschiene 78 für den Plattenhalter 7 ausgebildet. Dieser Führungsschiene 78 liegt außenseitig am Tragarm 77 eine aus gleitfähigem Kunststoff bestehende weitere Führungsschiene 79 für den Plattenhalter 7 gegenüber. Mittig trägt die außenseitige Führungsschiene 79 ein Federelement 109, das in einen entsprechenden Einschnitt 110 des Plattenhalters 7 eingreift. Die Oberseite des Tragarms 77 ist als in sich geschlossene Abdeckung 80 für den darunterliegenden Plattenhalter 7 mit zugehöriger Platte 1 ausgeführt. Die Abdeckung 80 dient als Staubschutz. Im Bereich der von dem Plattenhalter 7 aufgenommenen Platte 1 ist die Abdekkung 80 zur Beobachtung der Platte 1 als durchsichtige Scheibe 81 ausgebildet. Durch die Scheibe 81 verläuft der Lichtstrahl eines als Lichtschranke ausgebildeten, ortsfesten Sensors zur Feststellung des tatsächlichen Vorhandenseins einer Platte 1 in dem Plattenhalter 7.

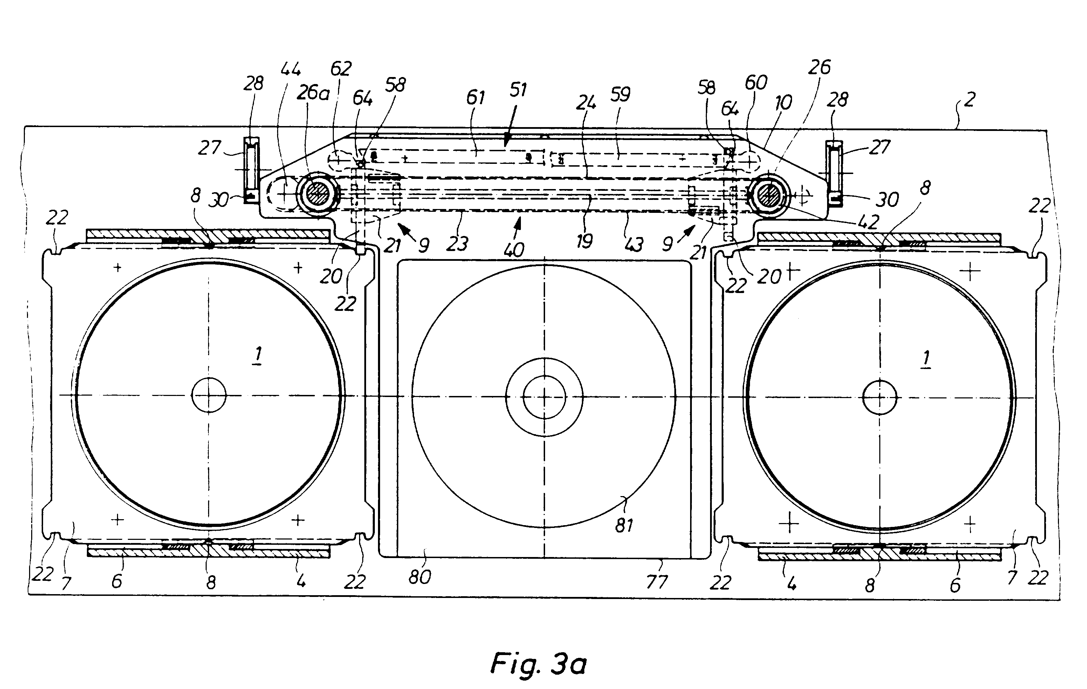

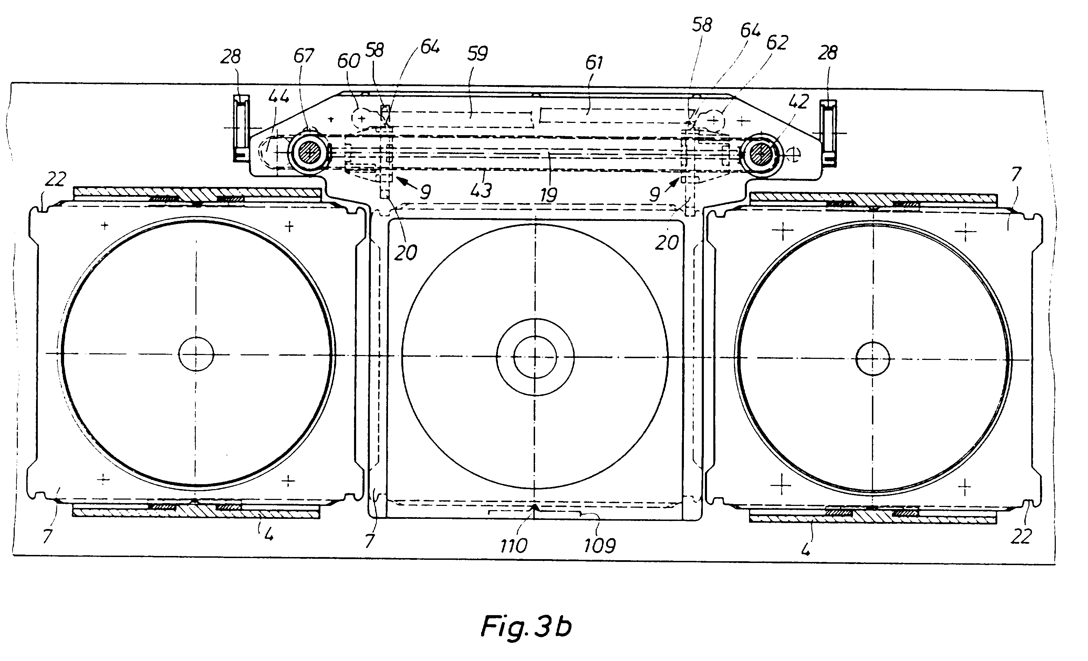

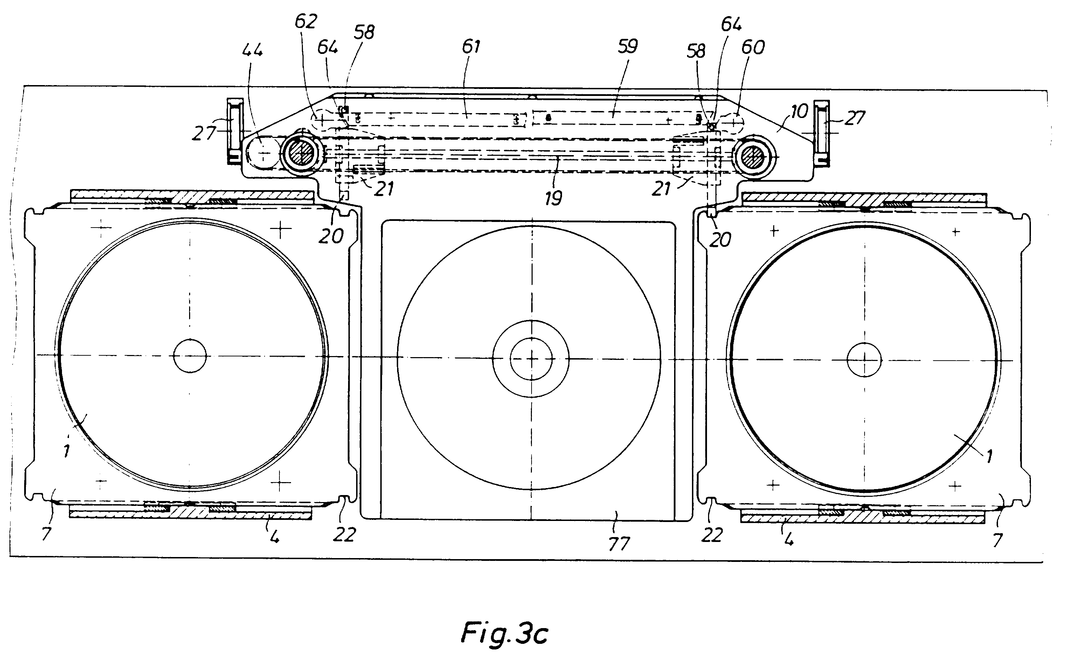

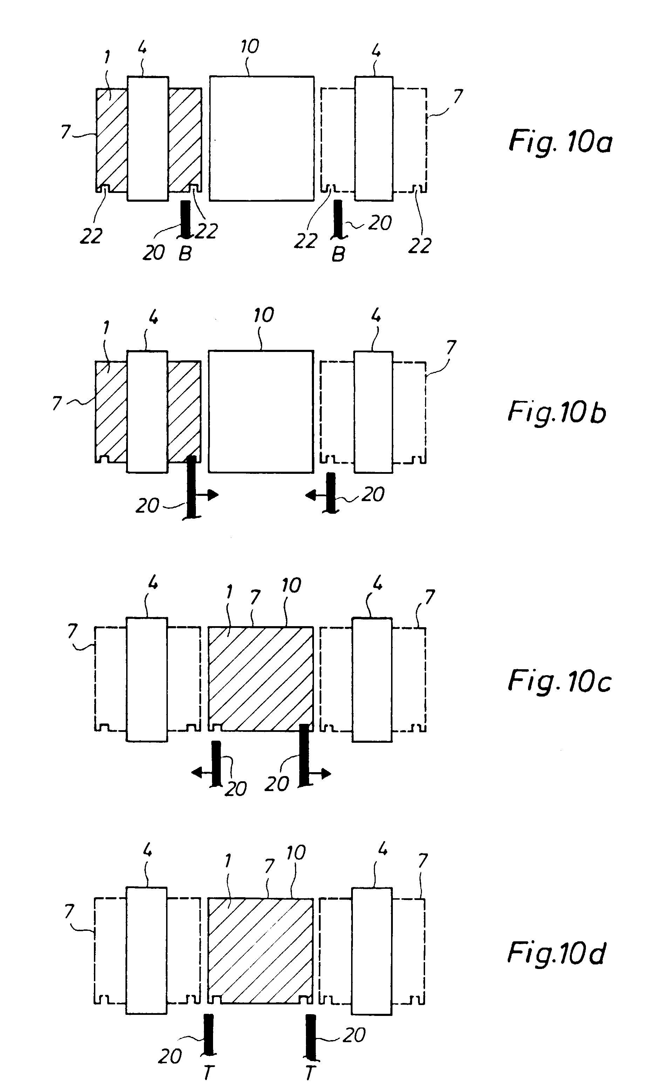

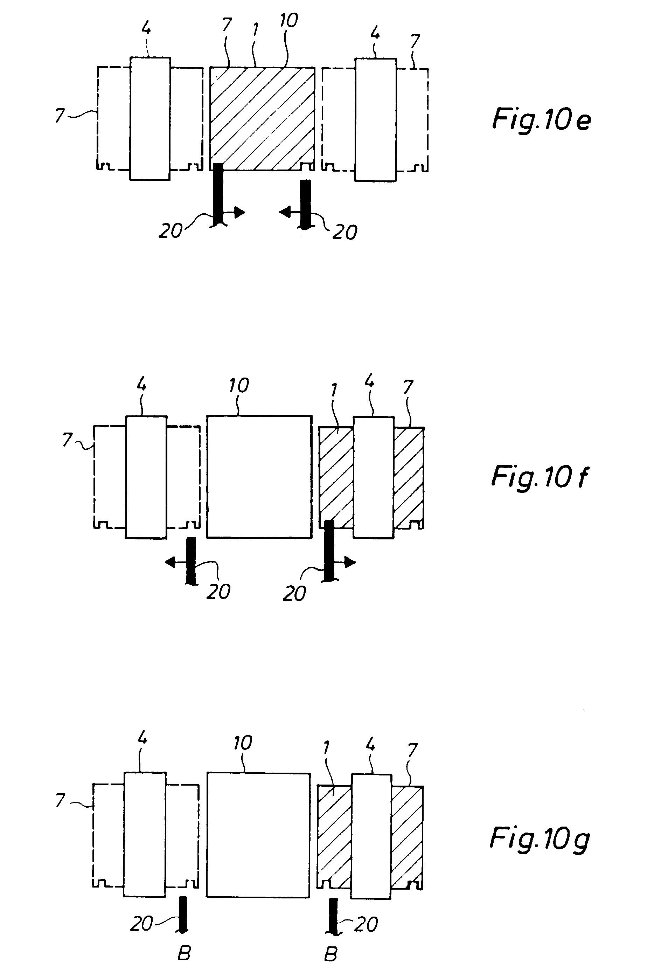

Soll beispielsweise ein im rechten Plattenmagazin 4 aufbewahrter Plattenhalter 7 mit eingelegter Platte 1 in einer Ebene zu dem gegenüberliegenden linken Plattenmagazin 4 befördert werden, dann fährt die Transporteinrichtung 10 aus ihrer Ausgangsstellung auf eine Höhe, die mit der Höhe des Aufnahmefaches 6 des rechten Plattenmagazins 4 übereinstimmt, in welchem der Plattenhalter 7 mit der zu befördernden Platte liegt. In dieser Position der Transporteinrichtung 10 befinden sich die Greifschieber 20 der Schlitten 21 der Auszugeinrichtungen 9 in der Bereitschaftsposition (vergl. Fig. 10a). Dann wird der Greifschieber 20, der dem Plattenhalter 7 mit der eingelegten Platte 1 zugeordnet ist, mit der entsprechenden Ausnehmung 22 des Plattenhalters 1 in Eingriff gebracht (vergl. Fig. 10b und Fig. 3a). Anschließend führen beide Greifarme 20 eine synchrone gegenläufige Bewegung solange aus, bis der Plattenhalter 7 mit der Platte 1 seine Endposition in der Transporteinrichtung 10 erreicht hat (vergl. Fig. 10c und Fig. 3d). Anschließend wird der mit dem Plattenhalter 7 in Eingriff stehende Greifschieber 20 außer Eingriff mit dem Plattenhalter 7 gebracht, wodurch sich nunmehr beide Greifschieber 20 in der Transporteinrichtungsposition befinden (vergl. Fig. 10d). Nunmehr wird der vorhergehend nicht mit dem Plattenhalter 7 in Eingriff gebrachte Greifschieber 20 aus seiner Transporteinrichtungsposition in eine Eingriffsposition mit der zugewandten Ausnehmung 22 des Plattenhalters 7 gebracht (vergl. Fig. 10e). Jetzt führen die Greifschieber 20 wiederum eine gegenläufige synchrone sich kreuzende Bewegung solange aus, bis der Plattenhalter 7 mit der Platte 1 seine Endposition im linken Plattenmagazin 4 erreicht hat (vergl. Fig. 10f und Fig. 3c). Daraufhin wird dieser Greifschieber 20 aus dem Plattenhalter 7 herausgefahren, wodurch sich nunmehr beide Greifschieber 20 wieder in der Bereitschaftsposiiton zur Herausnahme eines Plattenhalters 7 aus einem der Plattenmagazine 4 befinden (vergl. Fig. 10g). In entsprechend analoger Weise laufen die Bewegungsabläufe bei den anderen möglichen Transportwegen des Plattenhalters 7 mit einer Platte 1 ab, beispielsweise von einem Plattenmagazin 4 zu einem Laufwerk 5 oder von dem Platten-Lade-/Ausgabe-Schubfach 11 zu einem Plattenmagazin.

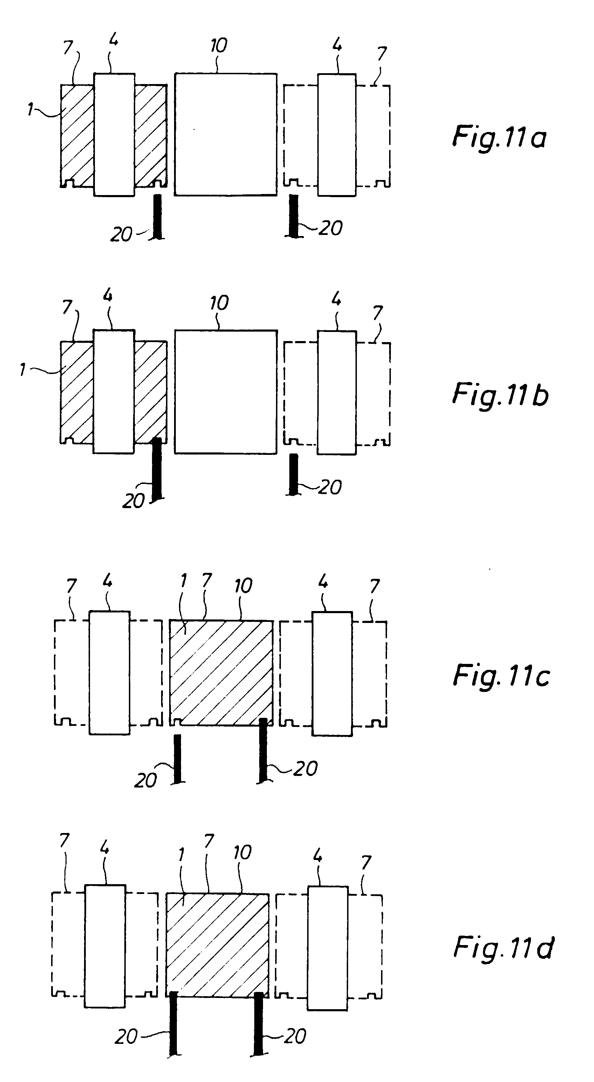

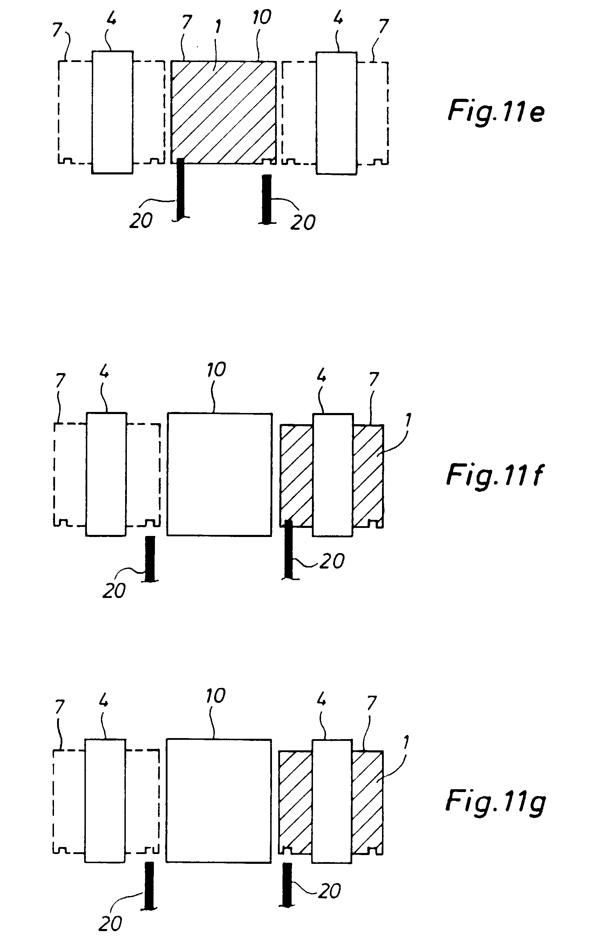

Bei einer entsprechend anderen konstruktiven Auslegung der Kulissensteuerung 51 können beim Durchwechseln eines Plattenhalters 7 mit eingelegter Platte 1 von dem rechten Plattenmagazin 4 zu dem linken Plattenmagazin 4 folgende Schritte nacheinander ablaufen: Der dem rechten Plattenmagazin 4 zugeordnete Greifschieber 20 wird aus der Bereitschaftsposition (vergl. Fig. 11a) mit dem in diesem Plattenmagazin 4 ausgewählten Plattenhalter 7 mit der zugehörigen Platte in Eingriff gebracht (vergl. Fig. 11b). Dann führen die Greifschieber 20 solange eine gegenläufige synchrone Bewegung aus, bis der Plattenhalter 7 mit der Platte 1 seine Endposition in der Transporteinrichtung 10 erhalten hat (vergl. Fig. 11c). Anschließend wird auch der andere Greifschieber 20 mit dem Plattenhalter 7 in eine Eingriffposition mit dem Plattenhalter 7 überführt (vergl. Fig. 11d). Anschließend wird der zuerst mit dem Plattenhalter 7 in Eingriff gebrachte Greifschieber 20 mit dem Plattenhalter 7 außer Eingriff gebracht (vergl. Fig. 11e). Nunmehr führen die Greifschieber 20 wieder eine gegenläufige sich kreuzende Bewegung aus und zwar solange, bis der Plattenhalter 7 mit der Platte 1 seine Endposition im linken Plattenmagazin erhalten hat (vergl. Fig. 11f). Dann wird der rechte Greifschieber 20 mit dem Plattenhalter 7 außer Eingriff gebracht, wodurch beide Greifschieber 20 wieder ihre Bereitschaftsposition einnehmen (vergl. Fig. 11g). In diesem Falle ist also beim Transport des Plattenhalters 7 immer ein Greifschieber 20 mit dem Plattenhalter 7 in Eingriff.

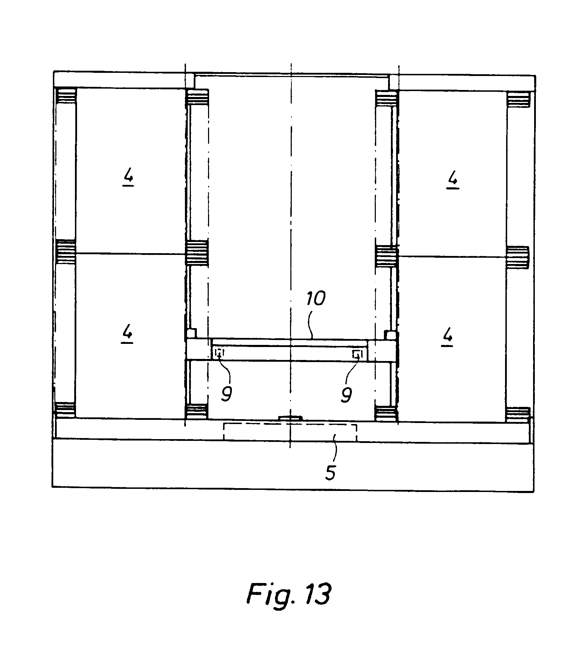

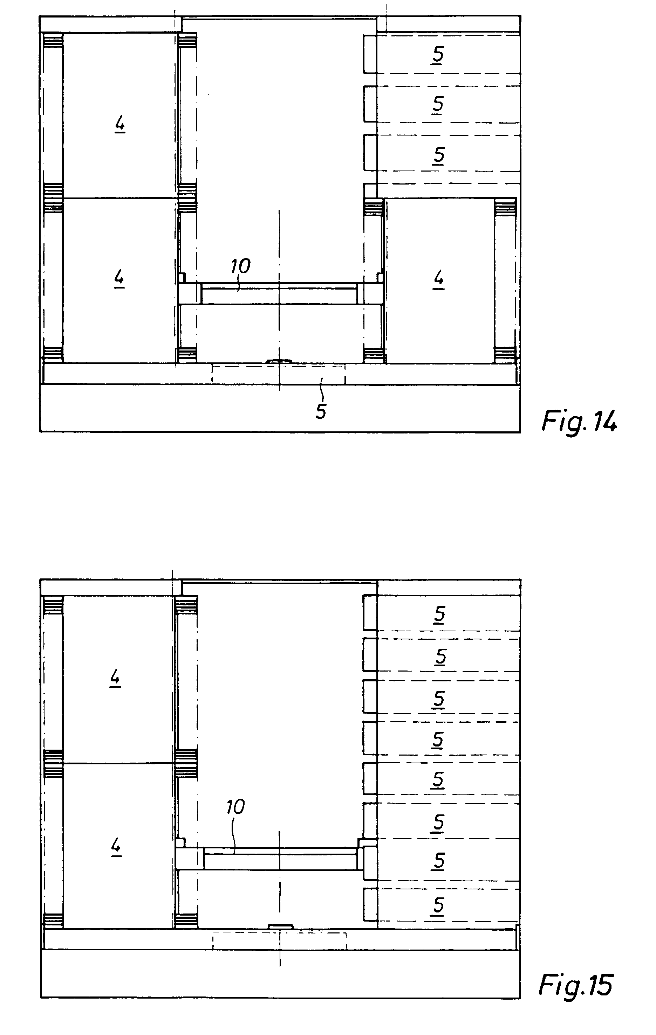

In den Fig. 13 bis 15 sind weitere Ausführungsformen des grundsätzlichen Aufbaus des Gerätes dargestellt. Bei der Ausführungsform nach Fig. 13 besitzt das Gerät jeweils rechts und links neben der Transporteinrichtung 10 zwei übereinanderliegende Plattenmagazine 4, wobei lediglich unterhalb der Transporteinrichtung 10 ein Laufwerk 5 angeordnet ist. Bei der Darstellung nach Fig. 14 sind neben der Transporteinrichtung 10 linksseitig zwei übereinanderliegende Plattenmagazine 4 und rechtsseitig ein Plattenmagazin 4 mit darüberliegenden Laufwerken 5 vorgesehen. Unterhalb der Transporteinrichtung 10 befindet sich ein weiteres Laufwerk 5. Die Ausführung nach Fig. 15 entspricht im wesentlichen derjenigen nach Fig. 14, wobei lediglich das rechtsseitige Plattenmagazin 4 durch weitere Laufwerke 5 ersetzt ist, d.h. den beiden linksseitigen Plattenmagazinen 4 liegt ein gleichhoher Turm aus übereinanderliegenden Laufwerken 5 gegenüber.

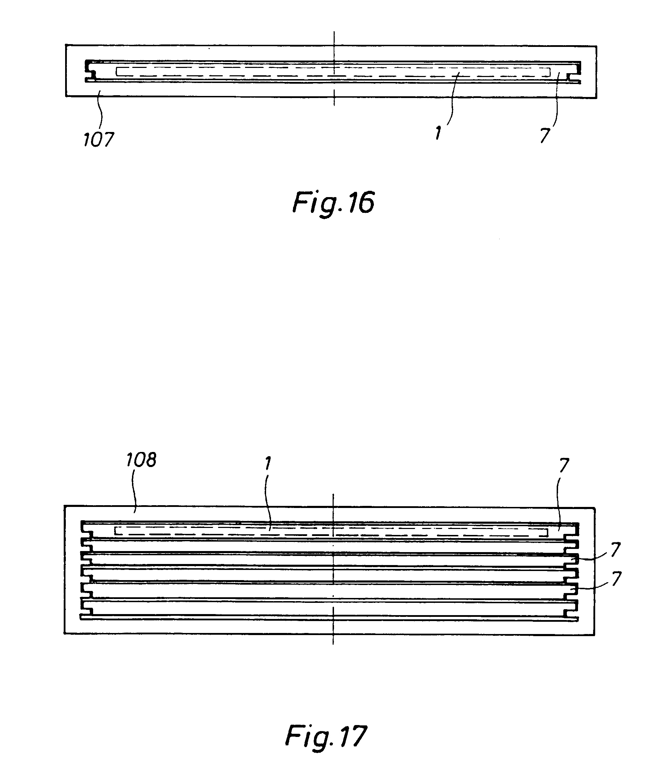

In Fig. 16 ist eine Aufbewahrungsart eines Plattenhalters 7 mit einer Platte 1 dargestellt. Zu diesem Zweck ist der Plattenhalter 7 mit der Platte 1 innerhalb einer Kassette 107 angeordnet. Die Kassette 107 wird in einem entsprechend vergrößerten Aufnahmefach 6 des Plattenmagazins 4 abgelegt. Außerhalb des Gerätes sind damit Platte 1 und Plattenhalter 7 gemeinsam einfach transportierbar. Bei der Darstellung nach Fig. 17 sind mehrere Plattenhalter 7 mit jeweils eingelegter Platte 1 innerhalb einer Kassette 108 angeordnet.

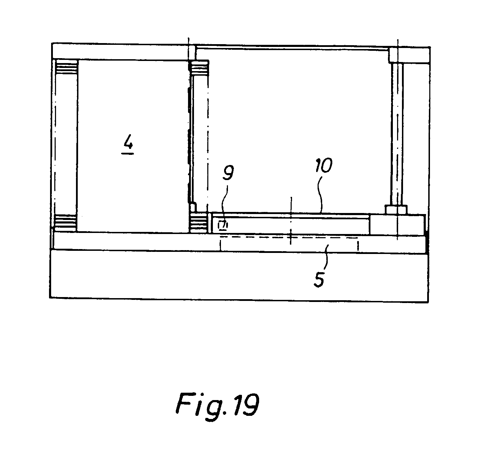

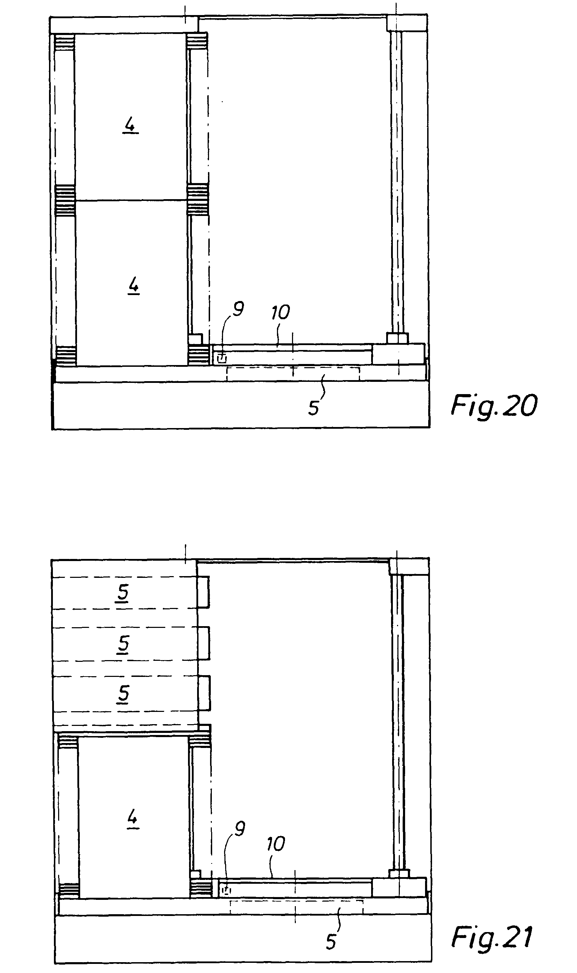

Die Figuren 19 bis 21 veranschaulichen alternative Ausführungsformen des Gerätes, bei denen auf der Transporteinrichtung 10 nur eine Auszugeinrichtung 9 horizontal verfahrbar ist, wobei dieser Auszugeinrichtung 9 einseitig neben der Transporteinrichtung 10 ein oder mehrere Plattenmagazine 4, ein oder mehrere Laufwerke 5 und/oder ein Platte-Lade-/Ausgabe-Schubfach 10 zugeordnet ist. Des weiteren kann sich unterhalb der Transporteinrichtung 10 noch ein weiteres Laufwerk 5 befinden. In diesen Fällen kann auf den Verdrehantrieb der Führungsstange 26a der Transporteinrichtung 10 verzichtet werden, wodurch sich insgesamt ein wesentlich einfacherer Aufbau des Steuermechanismus für die Auszugeinrichtung 9 ergibt.

## Patentansprüche

1. Wiedergabe- und/oder Aufzeichnungs- und/oder Ausgabegerät für als Informationsträger ausgebildete Platten (1), insbesondere CD-Platten, mit
- gegenüberliegenden Plattenmagazinen (4), die in horizontal übereinanderliegenen Aufnahmefächern (6) Plattenhalter (7) für mindestens eine Platte (1) aufnehmen,
- einer zwischen den Plattenmagazinen (4) angeordneten, rechnergesteuerten Transporteinrichtung (10) zur wahlweisen Hin- und Herbeförderung eines einzelnen Plattenhalters (7) mit der Platte (1) zwischen beliebigen Aufnahmefächern (6), zwischen einem Aufnahmefach (6) und mindestens einem Laufwerk (5) zum Auslesen oder Einschreiben von Informationen von der bzw. auf die Platte (1) oder zwischen einem Aufnahmefach (6) oder einem Laufwerk (5) und einem Platten-Lade/Ausgabe-Schubfach (11), und
- zwei auf der Transporteinrichtung (10) horizontal verfahrbaren Auszugeinrichtungen (9) für die Plattenhalter (7), wobei
- die Auszugeinrichtungen (9) gleichzeitig relativ zueinander gegenläufig sich kreuzend zwischen einer Bereitschaftsposition und einer Transporteinrichtungsposition verfahrbar sind, wobei
- in der Bereitschaftsposition je eine Auszugeinrichtung (9) benachbart zu je einem Plattenmagazin (4) positioniert ist, und die Auszugeinrichtungen (9) jeweils in eine Eingriffsposition mit einem Plattenhalter (7) zur Herausnahme des Plattenhalters (7) aus dem jeweiligen Plattenmagazin (4) gebracht werden können, und wobei
- in der Transporteinrichtungsposition die beiden Auszugeinrichtungen (9) benachbart zu dem im Vergleich zur Bereitschaftsposition gegenüberliegenden Plattenmagazin (4) positioniert sind, und die Auszugeinrichtungen (9) jeweils in eine Eingriffsposition mit dem in der Transporteinrichtung (10) positionierten Plattenhalter (7) gebracht werden können, um dabei den Plattenhalter (7) von der Transporteinrichtung (10) in das jeweils ursprünglich benachbarte Plattenmagazin (4) zu überführen.

2. Wiedergabe- und/oder Aufzeichnungs- und/oder Ausgabegerät für als Informationsträger ausgebildete Platten nach Anspruch 1, dadurch gekennzeichnet, daß jede Auszugeinrichtung (9) einen gleitbeweglich auf einer horizontalen Tragstange (19) geführten, mit einem ein- und ausfahrbaren Greifschieber (30) für einen Plattenhalter (7) versehenen Schlitten (21) umfaßt, wobei der eine Schlitten (21) an dem Vordertrum (23) und der andere Schlitten (21) an dem Hintertrum (24) eines mit einem drehrichtungsumkehrbaren Antriebsmotor (25) gekoppelten Riementriebs (40) oder dergleichen befestigt ist.

3. Wiedergabe- und/oder Aufzeichnungs- und/oder Ausgabegerät für als Informationsträger ausgebildete Platten nach Anspruch 1 oder 2, dadurch gekennzeichnet, daß beim Durchwechseln eines Plattenhalters (7) von einem Plattenmagazin (4) zum gegenüberliegenden Plattenmagazin (4) folgende Schritte nacheinander ablaufen:
- eine der dem Plattenmagazin (4) zugeordnete Auszugeinrichtung (9) wird mit dem Plattenhalter (7) in Eingriff gebracht,
- diese erste Auszugeinrichtung (9) befördert den Plattenhalter (7) in die Transporteinrichtung (10), wobei am Ende der Transportbewegung die erste Auszugeinrichtung (9) und die andere zweite Auszugeinrichtung (9) die nicht mit dem Platenhalter (7) in Eingriff stehende Transporeinrichtungsposition einnehmen,
- die zweite Auszugeinrichtung (9) wird dann mit dem Plattenhalter (7) in Eingriff gebracht und
- die zweite Auszugeinrichtung (9) befördert nun den Plattenhalter (7) aus der Transporteinrichtung (10) in das andere Plattenmagazin (4), wobei am Ende der Tansportbewegung beide Auszugeinrichtungen (9) eine nicht mit einem Plattenhalter (7) des zugehörigen Plattenmagazins (4) in Eingriff stehende Bereitschaftsposition einnehmen (Fig. 10a - Fig. 10g).

4. Wiedergabe- und/oder Aufzeichnungs- und/oder Ausgabegerät für als Informationsträger ausgebildete Platten nach Anspruch 1 oder 2, dadurch gekennzeichnet, daß beim Durchwechseln eines Plattenhalters (7) von einem Plattenmagazin (4) zum gegenüberliegenden Plattenmagazin (4) folgende Schritte nacheinander ablaufen:
- eine der den Plattenmagazinen (4) zugeordnete Auszugeinrichtung (9) wird mit dem Plattenhalter (7) in Eingriff gebracht,
- diese erste Auszugeinrichtung (9) befördert den Plattenhalter (7) in die Transporteinrichtung (10), wobei am Ende der Transportbewegung die erste Auszugeinrichtung (9) ihre Eingriffsposition behält und die andere zweite Auszugeinrichtung (9) eine nicht mit dem Plattenhalter (7) in Eingriff stehende Transporteinrichtungsposition einnimmt,
- die zweite Auszugeinrichtung (9) wird dann mit dem Plattenhalter (7) in Eingriff gebracht,
- die erste Auszugeinrichtung (9) wird mit dem Plattenhalter (7) außer Eingriff gebracht und
- die zweite Auszugeinrichtung (9) befördert den Plattenhalter (7) aus der Transporteinrichtung (10) in das andere Plattenmagazin (4), wobei am Ende der Transportbewegung beide Auszugeinrichtungen (9) eine nicht mit einem Plattenhalter (7) des zugehörigen Plattenmagazins (4) in Eingriff stehende Bereitschaftsposition einnehmen (Fig. 11a - Fig. 11g).

5. Wiedergabe- und/oder Aufzeichnungs- und/oder Ausgabegerät für als Informationsträger ausgebildete Platten nach einem der Ansprüche 1 bis 4, dadurch gekennzeichnet, daß die Transporteinrichtung (10) auf zwei parallel zueinander und vertikal verlaufenden Führungsstangen (26, 26a) gleitbeweglich gelagert und über mindestens einen Riementrieb (29) mit drehrichtungsumkehrbarem Antriebsmotor (36) auf- und abwärts bewegbar ist.

6. Wiedergabe- und/oder Aufzeichnungs- und/oder Ausgabegerät für als Informationsträger ausgebildete Platten nach einem der Ansprüche 1 bis 5, dadurch gekennzeichnet, daß der Transporteinrichtung (10) ein Sensor (38) zur Feststellung ihrer unteren Ausgangsstellung zugeordnet ist.

7. Wiedergabe- und/oder Aufzeichnungs- und/oder Ausgabegerät für als Informationsträger ausgebildete Platten nach einem der Ansprüche 1 bis 6, dadurch gekennzeichnet, daß der Transporteinrichtung (10) ein Sensor zur Überwachung des tatsächlichen Vorhandenseins einer Platte (1) in dem der Transporteinrichtung (10) befindlichen Plattenhalter (7) zugeordnet ist.

8. Wiedergabe- und/oder Aufzeichnungs- und/oder Ausgabegerät für als Informationsträger ausgebildete Platten nach einem der Ansprüche 1 bis 6, dadurch gekennzeichnet, daß eine der Führungsstangen (26, 26a) der Transporteinrichtung (10) drehbeweglich gelagert ist, und diese Führungsstange (26) zur Umwandlung ihrer Drehbewegung in eine Verschiebebewegung der Schlitten (21) zum einen über ein auf ihr verschiebbares, drehfestes Zahnrad (42) mit dem Zahnriemen (43) des an die Schlitten (21) gekoppelten Riementriebs (40) und zum anderen über einen weiteren Riementrieb (45) mit dem Antriebsmotor (25) für die Schlitten (21) verbunden ist.

9. Wiedergabe- und/oder Aufzeichnungs- und/oder Ausgabegerät für als Informationsträger ausgebildete Platten nach einem der Ansprüche 1 bis 8, dadurch gekennzeichnet, daß die drehbewegliche Führungsstange (26) über einen weiteren Riementrieb (47) mit einer rotierbaren Kodescheibe (49) verbunden ist, die mit Positionsimpulse erzeugenden Sensoren (50) zur Feststellung der Position der Auszugeinrichtungen (9) zusammenwirkt.

10. Wiedergabe- und/oder Aufzeichnungs- und/oder Ausgabegerät für als Informationsträger ausgebildete Platten nach einem der Ansprüche 1 bis 9, dadurch gekennzeichnet, daß den Greifschiebern (20) der Schlitten (21) eine umschaltbare Kulissensteuerung (51) derart zugeorndet ist, daß bei einer gegenläufigen Bewegung der Schlitten (21) aus der Bereitschaftsposition, in der die Greifschieber (20) an ihrer eingefahrenen Stellung jeweils einer Ausnehmung (22) eines Plattenhalters (7) in den gegenüberliegenden Plattenmagazinen (4) gegenüberstehen oder aus der Transporteinrichtungsposition, in der die Greifschieber (20) in ihrer eingefahrenen Stellung jeweils einer Ausnehmung (22) in einem in die Transporteinrichtung (10) beförderten Plattenhalter (7) gegenüberstehen, wahlweise der Greifschieber (20) des einen oder anderen Schlittens (21) zwangsläufig in eine eingreifende Stellung mit dem Plattenhalter (7) übergeht.

11. Wiedergabe- und/oder Aufzeichnungs- und/oder Ausgabegerät für als Informationsträger ausgebildete Platten nach einem der Ansprüche 1 bis 10, dadurch gekennzeichnet, daß die Greifschieber (20) im vorderen Bereich derart gegensinnig zueinander abgekröpft sind, daß bei einer gegenläufigen sich kreuzenden Bewegung der Schlitten (21), in der stets ein Greifschieber (20) in der ausgefahrenen und der andere Greifschieber (20) in der eingefahrenen Stellung ist, die vorderen Bereiche der Greifschieber (20) in einer Ebene aneinander vorbeifahren und in gleicher Ebene mit dem Plattenhalter (7) in Eingriff bringbar sind.

12. Wiedergabe- und/oder Aufzeichnungs- und/oder Ausgabegerät für als Informationsträger ausgebildete Platten, nach einem der Ansprüche 1 bis 11, dadurch gekennzeichnet, daß jeder Schlitten 821) mit einer vorspringenden Nase (52) gleitbeweglich in eine Führungsnut (53) eingreift, die jeweils in einem Einsatzteil (54) eine im Gehäuse (55) oder Transporteinrichtung (10) untergebrachte Chassis (56) ausgebildet ist, wobei die gegenüberliegenden Nuten (59) die gleiche Ebene der Greifschieber (20) bestimmen.

13. Wiedergabe- und/oder Aufzeichnungs- und/oder Ausgabegerät für als Informationsträger ausgebildete Platten nach einem der Ansprüche 1 bis 12, dadurch gekennzeichnet, daß jeweils ein Schlitten (21) auf einer von zwei in einer Ebene übereinanderliegenden Tragstangen (19) gelagert ist, und endseitig an den Greifschiebern (20) des oberen und unteren Schlittens (21) jeweils ein in einem Langloch (57) des zugehörigen Schlittens (21) gleitbeweglich geführter Zapfen (58) befestigt ist, wobei der Zapfen (58) des Greifschiebers (20) des oberen Schlittens (21) mit einer verstellbaren oberen Leitschiene (59) sowie endseitig dazu ortsfest angeordneten Rampen (60) und der Zapfen (58) des Greifschiebers (20) des unteren Schlittens (21) mit einer verstellbaren unteren Leitschiene (61) sowie endseitig dazu ortsfest angeordneten Rampen (62) zusammenwirkt.

14. Wiedergabe- und/oder Aufzeichnungs- und/oder Ausgabegerät für als Informationsträger ausgebildete Platten nach einem der Ansprüche 1 bis 13, dadurch gekennzeichnet, daß die der oberen Leitschiene (59) rechtsseitig zugeordnete Rampe (60) die Bereitschaftsposition des Greifschiebers (20) des oberen Schlittens (21) zur Herausnahme eines Plattenhalters (7) aus dem rechten Plattenmagazin (4) und die der unteren Leitschiene (61) linksseitig zugeordnete Rampe (62) die Bereitschaftsposition des Greifschiebers (20) des unteren Schlittens (21) zur Herausnahme eines Plattenhalters (7) aus dem linken Plattenmagazin (4) bestimmt.

15. Wiedergabe- und/oder Aufzeichnungs- und/oder Ausgabegerät für als Informationsträger ausgebildete Platten nach einem der Ansprüche 1 bis 14, dadurch gekennzeichnet, daß die der oberen Leitschiene (59) linksseitig zugeordnete Rampe (60) die Transporteinrichtungsposition eines aus dem rechten Plattenmagazin (4) herausgefahrenen Plattenhalters (7) in der Transporteinrichtung und die der unteren Leitschiene (61) rechtsseitig zugeordnete Rampe (62) die Transporteinrichtungsposition eines aus dem linken Plattenmagazin (4) herausgefahrenen Plattenhalters (7) in der Transporteinrichtung (10) bestimmt.

16. Wiedergabe- und/oder Aufzeichnungs- und/oder Ausgabegerät für als Informationsträger ausgebildete Platten nach einem der Ansprüche 1 bis 15, dadurch gekennzeichnet, daß die obere und die untere Leitschiene (59, 61) über ein angetriebenes Hebelgestänge (63) gleichzeitig parallel zueinander derart verfahrbar sind, daß entweder die obere oder die untere Leitschiene (59, 61) Durchgangsschlitze (64) zwischen derselben und den zugehörigen Rampen (60 bzw. 62) für den Zapfen (58) des Greifschiebers (20) des oberen oder des unteren Schlittens (21) freigibt.

17. Wiedergabe- und/oder Aufzeichnungs- und/oder Ausgabegerät für als Informationsträger ausgebildete Platten nach einem der Ansprüche 1 bis 16, dadurch gekennzeichnet, daß das mit den Leitschienen (59, 61) verbundene Hebelgestänge (63) einen oberen, mit der oberen Leitschiene (59) verbundenen Hebeltrieb (65) und einen unteren mit der unteren Leitschiene (61) verbundenen Hebeltrieb (66) umfaßt, die beide derart mit einem gemeinsamen Umschalthebel (67) verbunden sind, daß bei einer Betätigung des Umschalthebels (67) die Leitschienen (59, 61) eine begrenzte gegenläufige Parallel-Bewegung ausführen.

18. Wiedergabe- und/oder Aufzeichnungs- und/oder Ausgabegerät für als Informationsträger ausgebildete Platten nach einem der Ansprüche 1 bis 17, dadurch gekennzeichnet, daß die Durchgangsschlitze (64) derart ausgebildet sind, daß sie durch entsprechende Führung des Zapfens (58) des Greifschiebers (20) des zugehörigen Schlittens (21) in Abhängigkeit von der Bewegungsrichtung des Riementriebes (40) der Schlitten (21) den Greifschieber (20) in eine Eingriffsposition oder in eine Nicht-Eingriffposition mit dem Plattenhalter (7) überleiten.

19. Wiedergabe- und/oder Aufzeichnungs- und/oder Ausgabegerät für als Informationsträger ausgebildete Platten nach einem der Ansprüche 1 bis 18, dadurch gekennzeichnet, daß in der Eingriffsposition des Greifschiebers (20) des oberen Schlittens (21) bei einer Bewegung des Riementriebes (40) der Schlitten (21) der Zapfen (58) dieses Greifschiebers (20) an der Innenseite der oberen Leitschiene (59) und gleichzeitig der Zapfen (58) des sich nicht in der Eingriffsposition befindlichen Greifschiebers (20) des unteren Schlittens (21) an der Außenseite der unteren Leitschiene (61) entlang gleitet.

20. Wiedergabe- und/oder Aufzeichnungs- und/oder Ausgabegerät für als Informationsträger ausgebildete Platten nach eine der Ansprüche 1 bis 19, dadurch gekennzeichnet, daß in der Eingriffsposition des Greifschiebers (20) des unteren Schlittens (21) bei einer Bewegung des Riementriebes (40) der Schlitten (21) der Zapfen (58) dieses Greifschiebers (20) an der Innenseite der unteren Leitschiene (61) und gleichzeitig der Zapfen (58) des sich nicht in der Eingriffsposition befindlichen Greifschiebers (20) des oberen Schlittens (21) an der Außenseite der oberen Leitschiene (59) entlang gleitet.

21. Wiedergabe- und/oder Aufzeichnungs- und/oder Ausgabegerät für als Informationsgträger ausgebildete Platten nach einem der Ansprüche 1 bis 20, dadurch gekennzeichnet, daß der Umschalthebel (67) drehfest und verschiebbar auf der anderen, ebenfalls drehbeweglich gelagerten Führungsstange (26a) der Transporteinrichtung (10) angeordnet ist, wobei diese Führungsstange (26a) über einen Elektromagneten (74) und eine Rückholfeder (72), die mit einem auf der Führungsstange (26a) drehfest angeordneten Klemmring (69) zusammenwirken, ober über einen Drehrichtungsumkehrbaren Antriebsmotor (82) in unterschiedliche Drehrichtungen beaufschlagbar ist.

22. Wiedergabe- und/oder Aufzeichnungs- und/oder Ausgabegerät für als Informationsträger ausgebildete Platten nach einem der Ansprüche 1 bis 21, dadurch gekennzeichnet, daß der den Umschalthebel (67) aufnehmenden Führungsstange (26a) Sensoren (76) zur Überwachung der Drehrichtungsendstellungen der Führungsstange (26a) zugeordnet sind.

23. Wiedergabe- und/oder Aufzeichnungs- und/oder Ausgabegerät für als Informationsträger ausgebildete Platten nach einem der Ansprüche 1 bis 22, dadurch gekennzeichnet, daß das Gehäuse (55) der Transporteinrichtung (10) einen Tragarm (77) aufweist, wobei in den aus gleitfähigem Kunststoff bestehenden Einsatzteilen (54) des im Gehäuse (55) angeordneten Metall-Chassis (56) eine Führungsschiene (78) für den Plattenhalter (7) ausgebildet ist, und dieser Führungsschiene (78) außenseitig am Tragarm (77) eine aus gleitfähigem Kunststoff bestehende weitere Führungsschiene (79) für den Plattenhalter (7) gegenüberliegt.

24. Wiedergabe- und/oder Aufzeichnungs- und/oder Ausgabegerät für als Informationsträger ausgebildete Platten nach einem der Ansprüche 1 bis 23, dadurch gekennzeichnet, daß der außenseitigen Führungsschiene (79) des Tragarms (77) mittig ein Federelement (109) zugeordnet ist, das den Plattenhalter (7) durch Einrastung in einen entsprechenden Einschnitt (110) des Plattenhalters (7) in der Transporteinrichtung (10) zentriert.

25. Wiedergabe- und/oder Aufzeichnungs- und/oder Ausgabegerät für als Informationsträger ausgebildete Platten nach einem der Ansprüche 1 bis 24, dadurch gekennzeichnet, daß die Betätigung der in der Transporteirnichtung (10) befindlichen Steuerungsmechanismen für die Schlitten (21) und die Greifschieber (20) ohne elektrische Antriebselemente innerhalb der Transporteinrichtung (10) erfolgt.

26. Wiedergabe- und/oder Aufzeichnungs- und/oder Ausgabegerät für als Informationsträger ausgebildete Platten nach einem der Ansprüche 1 bis 25, dadurch gekennzeichnet, daß jeder Plattenhalter (7) durch zwei gegenüberliegende, am Plattenmagazin (4) angebrachte Federelemente (8) in einer gesicherten Lage im Aufnahmefach (6) positioniert ist, in der der Plattenhalter (7) von der zugehörigen Auszugeinrichtung (9) der Transporteinrichtung (10) über eine entsprechende Freimachung in der Seitenwand des zugehörigen Plattenmagazins (4) erfaßbar ist.

27. Wiedergabe- und/oder Aufzeichnungs- und/oder Ausgabegerät für als Informationsträger ausgebildete Platten nach einem der Ansprüche 1 bis 26, dadurch gekennzeichnet, daß der Freiraum zwischen den Plattenhaltern (7) in jedem Plattenmagazin (4) kleiner als die Dicke einer Platte (1) ist.

28. Wiedergabe- und/oder Aufzeichnungs- und/oder Ausgabegerät für als Informationsträger ausgebildete Platten nach einem der Ansprüche 1 bis 27, dadurch gekennzeichnet, daß die Dicke eines jeden Plattenhalters (7) nur geringfügig größer als die Dicke einer Platte (1) ist.

29. Wiedergabe- und/oder Aufzeichnungs- und/oder Ausgabegerät für als Informationsträger ausgebildete Platten nach einem der Ansprüche 1 bis 28, dadurch gekennzeichnet, daß der Plattenhalter (7) an seinen Längsseiten jeweils im vorderen Bereich eine Ausnehmung (22) besitzt, und daß entsprechend der Lage des Plattenhalters (7) im Aufnahmefach (6) des jeweiligen Plattenmagazins (4) bzw. in der Transporteinrichtung (10) der Greifschieber (20) der entsprechenden Auszugeinrichtung (9) mit einer dieser Ausnehmungen (22) in Eingriff bringbar ist.

30. Wiedergabe- und/oder Aufzeichnungs- und/oder Ausgabegerät für als Informationsträger ausgebildete Platten nach einem der Ansprüche 1 bis 29, dadurch gekennzeichnet, daß in der Bodenwand (104) und der Deckenwand (108) eines jeden Plattenmagazins Einschnitte (105) vorgesehen sind, die mit den entsprechenden Ausnehmungen (22) der Plattenhalter (7) in dem Plattenmagazin (4) fluchten.

31. Wiedergabe- undoder Aufzeichnungs- und/oder Ausgabegerät für als Informationsträger ausgebildete Platten nach einem der Ansprüche 1 bis 30, dadurch gekennzeichnet, daß mehrere Laufwerke (5) in der Vertikalachse eines der Plattenmagazine (4) übereinanderliegend auswechselbar angeordnet sind.

32. Wiedergabe- und/oder Aufzeichnungs- und/oder Ausgabegerät für als Informationsträger ausgebildete Platten nach einem der Ansprüche 1 bis 31, dadurch gekennzeichnet, daß unterhalb der Transporteinrichtung (10) ein Laufwerk (5) angeordnet ist.

33. Wiedergabe- und/oder Aufzeichnungs- und/oder Ausgabegerät für als Informationsträger ausgebildete Platten nach einem der Ansprüche 1 bis 32, dadurch gekennzeichnet, daß unterhalb der Transporteirnichtung ein Laufwerk (5) und in der Vertikalachse eines der Plattenmagazine (4) mehrere Laufwerke (5) angeordnet sind.

34. Wiedergabe- und/oder Aufzeichnungs- und/oder Ausgabegerät für als Informationsträger ausgebildete Platten nach einem der Ansprüche 1 bis 33, dadurch gekennzeichnet, daß eines der gegenüberliegenden Plattenmagazine (4) vollständig durch einen Turm übereinanderliegender Laufwerke (5) ersetzt ist.

35. Wiedergabe- und/oder Aufzeichnungs- und/oder Ausgabegerät für als Informationsträger ausgebildete Platten nach einem der Ansprüche 1 bis 34, dadurch gekennzeichnet, daß eines der gegenüberliegenden Plattenmagazine (4) vollständig durch einen Turm übereinanderliegender Laufwerke (5) ersetzt ist, und unterhalb der Transporteinrichtung (10) ein weiteres Laufwerk (5) angeordnet ist.

36. Wiedergabe- und/oder Aufzeichnungs- und/oder Ausgabegerät für als Informationsträger ausgebildete Platten nach einem der Ansprüche 1 bis 35, dadurch gekennzeichnet, daß das Platten-Lade-/Ausgabe-Schubfach (11) in der Vertikalachse eines der Plattenmagazine (4) auswechselbar angeordnet ist, und diesem ein Ein/Ausgabeschacht (12) für einen Plattenhalter (7) mit einer Platte (1) zugeordnet ist, wobei über das Platten-Lade-/Ausgabe-Schubfach (11) mittels der Transporteinrichtung (10) entweder ein Plattenhalter (7) mit der Platte (1) zu einem der Laufwerke (5) oder zu einem freien Aufnahmefach (6) in einem der Plattenmagazine (4) befördert oder eine in einem Plattenmagazin (4) vorhandene Platte (1) gegen eine andere Platte (1) ausgetauscht werden kann.

37. Wiedergabe- und/oder Aufzeichnungs- und/oder Ausgabegerät für als Informationsträger ausgebildete Platten nach einem der Ansprüche 1 bis 36, dadurch gekennzeichnet, daß bei einer Ausgabe einer Platte (1) oder einem Austausch einer Platte (1) gegen eine andere Platte (1) mittels des Platten-Lade-/Ausgabe-Schubfaches (11) in der ausgefahrenen Stellung des Platten-Lade-/Ausgabe-Schubfaches der Plattenhalter (7) zwangsweise im Platten-Lade-/Ausgabe-Schubfach (11) verbleibt.

38. Wiedergabe- und/oder Aufzeichnungs- und/oder Ausgabegerät für als Informationsträger ausgebildete Platten nach einem der Ansprüche 1 bis 37, dadurch gekennzeichent, daß der Plattenhalter (7) mit der Platte (1) innerhalb einer im entsprechend vergrößerten Aufnahmefach (6) des Plattenmagazins (4) abgelegten Kassette (107) angeordnet ist.

39. Wiedergabe- und/oder Aufzeichnungs- und/oder Ausgabegerät für als Informationsträger ausgebildete Platten nach einem der Ansprüche 1 bis 38, dadurch gekennzeichnet, daß mehrere Plattenhalter (7) mit jeweils zugehöriger Platte (1) innerhalb einer Kassette (108) untergebracht sind, die in einem entsprechend vergrößerten Aufnahmefach (6) des Plattenmagazins (4) abgelegt ist.

40. Wiedergabe- und/oder Aufzeichnungs- und/oder Ausgabegerät für als Informationsträger ausgebildete Platten nach einem der Ansprüche 1 bis 39, dadurch gekennzeichnet, daß der internen Rechnereinheit ein Zwischenspeicher (101) zugeordnet und ein externer Rechner vorgesehen ist, wobei die interne Rechnereinheit (13) das Gerät steuert und überwacht, den Zwischenspeicher (101) verwaltet und die Kommunikation mit dem externen Rechner durchführt.

41. Wiedergabe- und/oder Aufzeichnungs- und/oder Ausgabegerät für als Informationsträger ausgebildete Platten nach einem der Ansprüche 1 bis 40, dadurch gekennzeichnet, daß der Transporteinrichtung (10) einseitig nur ein Plattenmagazin (4) zugeordnet ist und ein Laufwerk (5) entweder in der Vertikalachse dieses Plattenmagazins (4) oder unterhalb der Transporteinrichtung (10) angeordnet ist, wobei auf der Transporteinrichtung lediglich eine auf dieser horizontal verfahrbare Auszueinrichtung (9) vorgesehen ist.

42. Wiedergabe- und/oder Aufzeichnungs- und/oder Ausgabegerät für als Informationsträger ausgebildete Platten nach einem der Ansprüche 1 bis 41, dadurch gekennzeichnet, daß der Transporteinrichtung (10) einseitig mehrere übereinanderliegende Plattenmagazine (4), mehrere übereinanderliegende Laufwerke und ein Platten-Lade-/Ausgabe-Schubach zugeordnet sind.

## Claims

1. Playing and/or recording and/or dispensing device for discs (1) in the form of data carriers, in particular CDs, including
- disc magazines (4). disposed side by side, which accommodate disc holders (7) for at least one disc (1) in accommodation compartments (6) lying horizontally above one another,
- a conveying arrangement (10) which is disposed between the disc magazines (4) and is computer-controlled for the selective conveying back and forth of an individual disc holder (7) containing the disc (1) between the described accommodation compartments (6), between one accommodation compartment (6) and at least one driving mechanism (5) for the reading-out or writing-in of data from or respectively on the disc (1) or between one accommodation compartment (6) or one driving mechanism (5) and one disc loading/dispensing drawer (11), and
- two extractor arrangements (9) for the disc holders (7), which arrangements are horizontally displaceable on the conveying arrangement (10),
- the extractor arrangements (9) being simultaneously displaceable relative to each other in opposite directions crossing each other between a standby position and a conveying arrangement position,
- each extractor arrangement (9) being positioned adjacent to a respective disc magazine (4) in the standby position, and the extractor arrangements (9) each being capable of being brought into an engagement position with a disc holder (7) for the removal of the disc holder (7) from the respective disc magazine (4), and
- in the conveying arrangement position the two extractor arrangements (9) being positioned adjacent to the oppositely situated disc magazine (4) compared with the standby position, and the extractor arrangements (9) each being capable of being brought into an engagement position with the disc holder (7), which is positioned in the conveying arrangement (10), to transfer, in this way, the disc holder (7) from the conveying arrangement (10) into the disc magazine (4) originally adjacent in each case.

2. Playing and/or recording and/or dispensing device for discs (1) in the form of data carriers according to claim 1, characterised in that each extractor arrangement (9) includes a slide (21), which is guided in a sliding manner on a horizontal supporting rod (19) and is provided with a retractable and extendable gripping slider (30) for a disc holder (7), the one slide (21) being mounted on the front side (23) and the other slide (21) on the rear side (24) of a belt drive (40) or similar which is coupled to a drive motor (25) with a reversible direction of rotation.

3. Playing and/or recording and/or dispensing device for discs (1) in the form of data carriers according to claim 1 or claim 2, characterised in that in the moving of one disc holder (7) from one disc magazine (4) to the oppositely situated disc magazine (4) the following steps occur in the following order:
- one of the extractor arrangements (9), assigned to the disc magazine (4), is brought into engagement with the disc holder (7),
- this first extractor arrangement (9) conveys the disc holder (7) into the conveying arrangement (10), at the end of the conveying movement the first extractor arrangement (9) and the other second extractor arrangement (9) assuming the conveying arrangement position which is not in engagement with the disc holder (7),
- the second extractor arrangement (9) is then brought into engagement with the disc holder (7) and
- the second extractor arrangement (9) then conveys the disc holder (7) out of the conveying arrangement (10) into the other disc magazine (4), at the end of the conveying movement the two extractor arrangements (9) assuming a standby position which is not in engagement with a disc holder (7) of the associated disc magazine (4) (Figures 10a - Figures 10g).

4. Playing and/or recording and/or dispensing device for discs (1) in the form of data carriers according to claim 1 or claim 2, characterised in that when moving a disc holder (7) from one disc magazine (4) to the oppositely situated disc magazine (4) the following steps occur in the following order:
- one of the extractor arrangements (9) associated with the disc magazines (4) is brought into engagement with the disc holder (7),
- this first extractor arrangement (9) conveys the disc holder (7) into the conveying arrangement (10), at the end of the conveying movement the first extractor arrangement (9) retaining its engaged position and the other second extractor arrangement (9) assuming a conveying arrangement position that is not in engagement with the disc holder (7),
- the second extractor arrangement (9) is then brought into engagement with the disc holder (7),
- the first extractor arrangement (9) is brought out of engagement with the disc holder (7) and
- the second extractor arrangement (9) conveys the disc holder (7) from the conveying arrangement (10) into the other disc magazine (4), at the end of the conveying movement both extractor arrangements (9) assuming a standby position that is not in engagement with a disc holder (7) of the associated disc magazine (4) (Figures 11a - 11g).

5. Playing and/or recording and/or dispensing device for discs (1) in the form of data carriers according to one of the claims 1 to 4, characterised in that the conveying arrangement (10) is mounted in a sliding manner on two guide rods (26, 26a), which extend parallel to each other and vertically, and is displaceable upwards and downwards via at least one belt drive (29) including a drive motor (36) with a reversible direction of rotation.

6. Playing and/or recording and/or dispensing device for discs (1) in the form of data carriers according to one of the claims 1 to 5, characterised in that a sensor (38) is assigned to the conveying arrangement (10) for the ascertainment of its lower initial position.

7. Playing and/or recording and/or dispensing device for discs (1) in the form of data carriers according to one of the claims 1 to 6, characterised in that a sensor is assigned to the conveying arrangement (10) for the monitoring of the actual presence of a disc (1) in the disc holder (7) situated in the conveying arrangement (10).

8. Playing and/or recording and/or dispensing device for discs (1) in the form of data carriers according to one of the claims 1 to 6, characterised in that one of the guide rods (26. 26a) of the conveying arrangement (10) is mounted so as to be rotatable, for the conversion of its rotary movement into a displacing movement of the slides (21) on the one hand via a toothed wheel (42). which is non-rotatable and displaceable on said rod, this guide rod (26) is connected to the toothed belt (43) of the belt drive (40), which is coupled to the slides (21), and on the other hand via another belt drive (45) is connected to the drive motor (25) for the slides (21).

9. Playing and/or recording and/or dispensing device for discs (1) in the form of data carriers according to one of the claims 1 to 8, characterised in that the rotatable guide rod (26) is connected to a rotatable code disc (49) via another belt drive (47), which code disc interacts with sensors (50) which generate positional pulses for the ascertainment of the position of the extractor arrangement (9).

10. Playing and/or recording and/or dispensing device for discs (1) in the form of data carriers according to one of the claims 1 to 9, characterised in that a reversible link motion (51) is assigned to the gripping sliders (20) of the slides (21) such that with a movement of the slides (21) in opposite directions from the standby position, in which the gripping sliders (20) in their retracted position each stand opposite a recess (22) in the disc holder (7) in the oppositely situated disc magazine (4), or from the conveying arrangement position, in which the gripping sliders (20) in their retracted position each stand opposite a recess (22) in one disc holder (7) conveying into the conveying arrangement (10), the gripping slider (20) of the one or the other slide (21) selectively transfers in an unavoidable manner into an engaging position with the disc holder (7).

11. Playing and/or recording and/or dispensing device for discs (1) in the form of data carriers according to one of the claims 1 to 10, characterised in that the gripping sliders (20) are offset in the front region in opposition relative to each other such that when the slides (21) are displaced in opposite directions crossing each other, during which movement one gripping slider (20) is always in the extended position and the other gripping slider (20) in the retracted position, the front regions of the gripping sliders (20) pass by each other in one plane and can be brought into engagement with the disc holder (7) in the same plane.

12. Playing and/or recording and/or dispensing device for discs (1) in the form of data carriers according to one of the claims 1 to 11, characterised in that each slide (21) with a protruding projection (52) meshes in a sliding manner with a guide groove (53), which in each case is configured in an insert portion (54) as a chassis (56) accommodated in the housing (55) or conveying arrangement (10), the oppositely situated grooves (59) determining the same plane of the gripping slider (20).

13. Playing and/or recording and/or dispensing device for discs (1) in the form of data carriers according to one of the claims 1 to 12, characterised in that in each case one slide (21) is mounted on one of two supporting rods (19) situated one on top of the other in a plane, and at the end on the gripping sliders (20) of the top and bottom slide (21) in each case a pin (58) is secured in a sliding manner in an elongate hole (57) in the associated slide (21), the pin (58) of the gripping slider (20) of the top slide (21) interacting with an adjustable top guide rail (59) and with inclines (60) that are disposed at the end relative to this in a stationary manner and the pin (58) of the gripping slider (20) of the bottom slide (21) interacting with an adjustable bottom guide rail (61) and with inclines (62) that are disposed at the end relative to this.

14. Playing and/or recording and/or dispensing device for discs (1) in the form of data carriers according to one of the claims 1 to 13, characterised in that the incline (60) on the right-hand side assigned to the top guide rail (59) determines the standby position of the gripping slider (20) of the top slide (21) for the removal of a disc holder (7) from the right-hand disc magazine (4) and the incline (62) on the left-hand side assigned to the bottom guide rail (61) determines the standby position of the gripping slider (20) of the lower slide (21) for the removal of a disc holder (7) from the left-hand disc magazine (4).

15. Playing and/or recording and/or dispensing device for discs (1) in the form of data carriers according to one of the claims 1 to 14, characterised in that the incline (60) on the left-hand side assigned to the top guide rail (59) determines the conveying arrangement position of one disc holder (7) removed from the right-hand disc magazine (4) in the conveying arrangement (10) and the incline (62) on the right-hand side assigned to the bottom guide rail (61) determines the conveying arrangement position of one disc holder (7) removed from the left-hand disc magazine (4) in the conveying arrangement (10).

16. Playing and/or recording and/or dispensing device for discs (1) in the form of data carriers according to one of the claims 1 to 15, characterised in that the top and the bottom guide rails (59, 61) are displaceable simultaneously parallel to one another via a driven lever system (63),such that either the top or the bottom guide rail (59, 61) releases through-slots (64) between the same and the associated inclines (60 or 62) for the pin (58) of the gripping slider (20) of the top or of the bottom slide (21).

17. Playing and/or recording and/or dispensing device for discs (1) in the form of data carriers according to one of the claims 1 to 16, characterised in that the lever system (63) connected to the guide rails (59, 61) includes a top lever drive (65) which is connected to the top guide rail (59) and a bottom lever drive (66) which is connected to the bottom guide rail (61), the two being connected to a common reversing lever (67) such that when the reversing lever (67) is actuated, the guide rails (59, 61) execute a finite parallel movement in opposite directions.

18. Playing and/or recording and/or dispensing device for discs (1) in the form of data carriers according to one of the claims 1 to 17, characterised in that the through-slots (64) are configured such that, through the corresponding guiding of the pin (58) of the gripper slider (20) of the associated slide (21) in dependence on the direction of movement of the belt drive (40) of the slides (21), they conduct the gripper slider (20) into an engagement position or into a non-engagement position with the disc holder (7).

19. Playing and/or recording and/or dispensing device for discs (1) in the form of data carriers according to one of the claims 1 to 18, characterised in that, in the engagement position of the gripper slider (20) of the top slide (21) with a movement of the belt drive (40) of the slides (21), the pin (58) of this gripper slide (20) slides along on the inside of the top guide rail (59) and at the same time the pin (58) of the gripper slider (20), not in the engagement position, of the bottom slide (21) slides along on the outside of the bottom guide rail (61).

20. Playing and/or recording and/or dispensing device for discs (1) in the form of data carriers according to one of the claims 1 to 19, characterised in that, in the engagement position of the gripping slider (20) of the bottom slide (20) with a movement of the belt drive (40) of the slides (21), the pin (58) of this gripping slider (20) slides along on the inside of the bottom guide rail (61) and at the same time the pin (58) of the gripping slider (20) not in the engagement position, of the top slide (21) slides along on the outside of the top guide rail (59).

21. Playing and/or recording and/or dispensing device for discs (1) in the form of data carriers according to one of the claims 1 to 20, characterised in that the reversing lever (67) is disposed so as to be non-rotatable and displaceable on the other guide rod (26a) of the conveying arrangement (10), which rod is also mounted so as to be rotatable, whereby this guide rod (26a) can be impinged upon via an electromagnet (74) and a return spring (72), which interact with a clamping ring (69) disposed so as to be non-rotatable on the guide rod (26a), above via a drive motor (82) with a reversible direction of rotation in various directions of rotation.

22. Playing and/or recording and/or dispensing device for discs (1) in the form of data carriers according to one of the claims 1 to 21, characterised in that sensors (76) are assigned to the guide rod (26a) accommodating the reversing lever (67) for the monitoring of the direction of rotation end positions of the guide rod (26a).

23. Playing and/or recording and/or dispensing device for discs (1) in the form of data carriers according to one of the claims 1 to 22, characterised in that the housing (55) of the conveying arrangement (10) has a supporting arm (77), a guide rail (78) for the disc holder (7) being configured in the insert portions (54) of the metal chassis (56) which is disposed in the housing (55), which inserts are made of plastics material with a sliding ability, and on the outside on the supporting arm (77) this guide rail (78) is situated opposite another guide rail (79) for the disc holder (7), which guide rail is made of plastics material with a sliding ability.

24. Playing and/or recording and/or dispensing device for discs (1) in the form of data carriers according to one of the claims 1 to 23, characterised in that a resilient element (109) is assigned to the centre of the outer guide rail (79) of the supporting arm (77), which resilient element centres the disc holder (7) by locking home into a corresponding incision (110) in the disc holder (7) in the conveying arrangement (10).

25. Playing and/or recording and/or dispensing device for discs (1) in the form of data carriers according to one of the claims 1 to 24, characterised in that the control mechanism for the slides (21) and the grabbing slider (20), situated in the conveying arrangement (10), is actuated without any electrical driving elements inside the conveying arrangement (10).

26. Playing and/or recording and/or dispensing device for discs (1) in the form of data carriers according to one of the claims 1 to 25 characterised in that each disc holder (7) is positioned in a secured position in the accommodation compartment (6) through two oppositely situated resilient elements (8) attached to the disc magazine (4), in which position the disc holder (7) can be grasped by the associated extractor arrangement (9) of the conveying arrangement (10) via a corresponding aperture in the side wall of the associated disc magazine (4).

27. Playing and/or recording and/or dispensing device for discs (1) in the form of data carriers according to one of the claims 1 to 26, characterised in that the space between the disc holders (7) in each disc magazine (4) is smaller than the thickness of one disc (1).

28. Playing and/or recording and/or dispensing device for discs (1) in the form of data carriers according to one of the claims 1 to 27. characterised in that the thickness of each of the disc holders (7) is only slightly greater than the thickness of one disc (1).

29. Playing and/or recording and/or dispensing device for discs (1) in the form of data carriers according to one of the claims 1 to 28, characterised in that the disc holder (7) has a recess (22) on each of its longitudinal sides in the front region, and that corresponding to the position of the disc holder (7) in the accommodation compartment (6) of the respective disc magazine (4) or in the conveying arrangement (10), the grabbing slider (20) of the corresponding extractor arrangement (9) can be brought into engagement with one of these recesses (22).

30. Playing and/or recording and/or dispensing device for discs (1) in the form of data carriers according to one of the claims 1 to 29, characterised in that incisions (105) are provided in the bottom wall (104) and the top wall (108) of each of the disc magazines, which incisions are aligned with the corresponding recesses (22) in the disc holder (7) in the disc magazine (4).

31. Playing and/or recording and/or dispensing device for discs (1) in the form of data carriers according to one of the claims 1 to 30, characterised in that a plurality of driving mechanisms (5) are disposed lying one above another in the vertical axis of one of the disc magazines (4) so as to be interchangeable.

32. Playing and/or recording and/or dispensing device for discs (1) in the form of data carriers according to one of the claims 1 to 31, characterised in that one driving mechanism (5) is disposed below the conveying arrangement (10).

33. Playing and/or recording and/or dispensing device for discs (1) in the form of data carriers according to one of the claims 1 to 32, characterised in that one driving mechanism (5) is disposed below the conveying arrangement and a plurality of driving mechanisms (5) are disposed in the vertical axis of one of the disc magazines (4).

34. Playing and/or recording and/or dispensing device for discs (1) in the form of data carriers according to one of the claims 1 to 33, characterised in that one of the oppositely situated disc magazines (4) is replaced completely by a tower of driving mechanisms (5) lying one on top of another.

35. Playing and/or recording and/or dispensing device for discs (1) in the form of data carriers according to one of the claims 1 to 34, characterised in that one of the oppositely situated disc magazines (4) is replaced completely by a tower of driving mechanisms (5) lying one on top of another, and an additional driving mechanism (5) is disposed below the conveying arrangement (10).

36. Playing and/or recording and/or dispensing device for discs (1) in the form of data carriers according to one of the claims 1 to 35, characterised in that the disc loading / dispensing drawer (11) is disposed so as to be interchangeable in the vertical axis of one of the disc magazines (4), and an input/dispensing shaft (12) for one disc holder (7) containing one disc (1) is assigned to this drawer, via the disc loading/dispensing drawer (11) through the intermediary of the conveying arrangement (10), either one disc holder (7) containing the disc (1) being able to be conveyed to one of the driving mechanisms (5) or to a free accommodation compartment (6) in one of the disc magazines (4) or a disc (1) already in one of the disc magazines (4) being able to be exchanged for another disc (1).

37. Playing and/or recording and/or dispensing device for discs (1) in the form of data carriers according to one of the claims 1 to 36, characterised in that when a disc (1) is being dispensed or exchanged for another disc (1) through the intermediary of the disc loading/dispensing drawer (11) in the extended position of the disc loading/dispensing drawer, the disc holder (7) remains forcibly in the disc loading/dispensing drawer (11).

38. Playing and/or recording and/or dispensing device for discs (1) in the form of data carriers according to one of the claims 1 to 37, characterised in that the disc holder (7) containing the disc (1) is disposed inside a cassette (107) which is deposited in the accommodation compartment (6) of the disc magazine (4), which compartment is appropriately enlarged.

39. Playing and/or recording and/or dispensing device for discs (1) in the form of data carriers according to one of the claims 1 to 38, characterised in that a plurality of disc holders (7) each containing associated discs (1) are accommodated inside a cassette (108), which is deposited in an accommodation compartment (6) of the disc magazine (4), which compartment is appropriately enlarged.

40. Playing and/or recording and/or dispensing device for discs (1) in the form of data carriers according to one of the claims 1 to 39, characterised in that an intermediate store (101) is assigned to the internal computer unit and an external computer is provided, the internal computer unit (13) controlling and monitoring the device, administering the intermediate store (101) and executing the communication with the external computer.

41. Playing and/or recording and/or dispensing device for discs (1) in the form of data carriers according to one of the claims 1 to 40, characterised in that only one disc magazine (4) is assigned to the conveying arrangement (10) on one side and one driving mechanism (5) is disposed either in the vertical axis of this disc magazine (4) or below the conveying arrangement (10), simply one extractor arrangement (9) which is horizontally displaceable on the same being provided on the conveying arrangement (10).

42. Playing and/or recording and/or dispensing device for discs (1) in the form of data carriers according to one of the claims 1 to 41, characterised in that a plurality of disc magazines (4) lying one on top of another, a plurality of driving mechanisms (5) lying one on top of another and one disc loading/dispensing drawer are assigned to the conveying arrangement (10) on one side.

## Revendications

1. Appareil de lecture et/ou d'enregistrement et/ou de sortie pour disques (1) conformés en supports d'informations, en particulier des disques compacts, comportant
- des magasins à disques (4) se faisant face, qui logent des porte-disques (7) pour au moins un disque (1) dans des cases de réception (6) superposées horizontalement,
- un dispositif de transport (10) commandé par ordinateur, monté entre les magasins à disques (4), pour le transport au choix dans un sens et dans l'autre d'un porte-disque individuel (7) avec le disque (1) entre des cases de réception (6) quelconques, entre une case de réception (6) et au moins une platine (5) pour la lecture ou l'enregistrement d'informations à partir du disque (1) ou sur celui-ci, ou entre une case de réception (6) ou une platine (5) et un tiroir de chargement/extraction de disque (11), et
- deux dispositifs d'extraction (9) pour les porte-disques (7) déplaçables horizontalement sur le dispositif de transport (10),
- les dispositifs d'extraction (9) étant déplaçables simultanément, les uns par rapport aux autres, en sens contraire, en se croisant, entre une position d'attente et une position de dispositif de transport,
- dans la position d'attente, un dispositif d'extraction (9) étant positionné au voisinage d'un magasin à disques (4), et les dispositifs d'extraction (9) pouvant être amenés chaque fois dans une position d'engagement avec un porte-disque (7) en vue de l'extraction du porte-disque (7) hors du magasin à disques respectif (4), et
- dans la position de dispositif de transport, les deux dispositifs d'extraction (9) étant positionnés au voisinage du magasin à disques (4) opposé, par rapport à la position d'attente, et les dispositifs d'extraction (9) pouvant être amenés chaque fois dans une position d'engagement avec le porte-disque (7), positionné dans le dispositif de transport (10), pour faire passer dans ce cas le porte-disque (7), du dispositif de transport (10) dans le magasin à disques (4) initialement voisin.

2. Appareil de lecture et/ou d'enregistrement et/ou de sortie pour des disques conformés en supports d'informations selon la revendication 1, caractérisé en ce que chaque dispositif d'extraction (9) comprend un chariot (21) guidé mobile à glissement sur une barre de transport horizontale (19), avec une griffe coulissante (30), pouvant être introduite et extraite, pour un chariot (21) pourvu d'un porte-disque (7), un chariot (21) étant fixé sur le brin avant (23) et l'autre chariot (21) sur le brin arrière (24) d'une transmission à courroie (40) ou similaire, couplée à un moteur d'entraînement (25) à sens de rotation réversible.

3. Appareil de lecture et/ou d'enregistrement et/ou de sortie pour des disques conformés en supports d'informations selon la revendication 1 ou 2, caractérisé en ce que lors de l'échange d'un porte-disque (7), d'un magasin à disques (4) vers le magasin à disques opposé (4), se déroulent l'une après l'autre les étapes suivantes :
- un dispositif d'extraction (9), associé au magasin à disques (4), est amené en engagement avec le porte-disque (7),
- ce premier dispositif d'extraction (9) transporte le porte-disque (7) dans le dispositif de transport (10), à la fin du mouvement de transport, le premier dispositif d'extraction (9) et l'autre deuxième dispositif d'extraction (9) occupant la position de dispositif de transport (10) désengagée du porte-disque (7),
- le deuxième dispositif d'extraction (9) est amené ensuite en engagement avec le porte-disque (7) et
- le deuxième dispositif d'extraction (9) transporte maintenant le porte-disque (7), du dispositif de transport (10) dans l'autre magasin à disques (4), à la fin du mouvement de transport les deux dispositifs d'extraction (9) occupant une position d'attente désengagée d'un porte-disque (7) du magasin à disques correspondant (4) (fig. 10a à fig. 10g).

4. Appareil de lecture et/ou d'enregistrement et/ou de sortie pour des disques conformés en supports d'informations selon la revendication 1 ou 2, caractérisé en ce que lors de l'échange d'un porte-disque (7), d'un magasin à disques (4) vers le magasin à disques opposé (4), se déroulent l'une après l'autre les étapes suivantes :
- un dispositif d'extraction (9) associé au magasin à disques (4) est amené en engagement avec le porte-disque (7),
- ce premier dispositif d'extraction (9) transporte le porte-disque (7) dans le dispositif de transport (10), à la fin du mouvement de transport le premier dispositif d'extraction (9) maintenant sa position d'engagement et l'autre deuxième dispositif d'extraction (9) occupant une position de dispositif de transport désengagée du porte-disque (7),
- le deuxième dispositif d'extraction (9) est alors amené en engagement avec le porte-disque (7),
- le premier dispositif d'extraction (9) est désengagé du porte-disque (7) et
- le deuxième dispositif d'extraction (9) transporte le porte-disque (7), du dispositif de transport (10) dans l'autre magasin à disques (4), à la fin du mouvement de transport, les deux dispositifs d'extraction (9) occupant une position d'attente désengagée d'avec un porte-disque (7) du magasin à disques correspondant (4) (fig. 11a à fig. 11g).

5. Appareil de lecture et/ou d'enregistrement et/ou de sortie pour des disques conformés en supports d'informations selon l'une des revendications 1 à 4, caractérisé en ce que le dispositif de transport (10) est monté mobile à glissement sur deux tiges de guidage (26, 26a), s'étendant verticalement et parallèles entre elles et est déplaçable en montée et en descente, par au moins un mécanisme à courroie (29) avec moteur d'entraînement (36) à sens de rotation réversible.

6. Appareil de lecture et/ou d'enregistrement et/ou de sortie pour des disques conformés en supports d'informations selon l'une des revendications 1 à 5, caractérisé en ce qu'au dispositif de transport (10) est associé un capteur (38) pour établir sa position initiale inférieure.

7. Appareil de lecture et/ou d'enregistrement et/ou de sortie pour des disques conformés en supports d'informations selon l'une des revendications 1 à 6, caractérisé en ce qu'au dispositif de transport (10) est associé un capteur pour surveiller la présence effective d'un disque (1) dans le porte-disque (7) se trouvant dans le dispositif de transport (10).

8. Appareil de lecture et/ou d'enregistrement et/ou de sortie pour des disques conformés en supports d'informations selon l'une des revendications 1 à 6, caractérisé en ce que l'une des tiges de guidage (26, 26a) du dispositif de transport (10) est montée mobile en rotation, et cette tige de guidage (26) est reliée, pour la transformation de son mouvement de rotation en un mouvement de translation des chariots (21), d'une part à la courroie crantée (43) du mécanisme à courroie (40) accouplé aux chariots (21), par une roue dentée (42) fixe en rotation, coulissable sur celle-ci, et d'autre part au moteur d'entraînement (25) pour les chariots (21) par un autre mécanisme à courroie (45).

9. Appareil de lecture et/ou d'enregistrement et/ou de sortie pour des disques conformés en supports d'informations selon l'une des revendications 1 à 8, caractérisé en ce que la tige de guidage (26) mobile à rotation est reliée, par un autre mécanisme à courroie (47), à un disque codé pouvant tourner (49), qui coopère avec des capteurs (50) produisant des impulsions de position, afin d'établir la position des dispositifs d'extraction (9).

10. Appareil de lecture et/ou d'enregistrement et/ou de sortie pour des disques conformés en supports d'informations selon l'une des revendications 1 à 9, caractérisé en ce qu'aux pinces coulissantes (20) des chariots (21) est associée une commande à coulisse commutable (51), de manière que lors d'un mouvement en sens contraire des chariots (21), à partir de la position d'attente à laquelle les pinces coulissantes (20) dans leur position rentrée, font face chacune à un évidement (22) d'un porte-disque (7) dans les magasins à disques (4) opposés, ou à partir de la position de dispositif de transport à laquelle les pinces coulissantes (20) dans leur position introduite font face chacune à un évidement (22) dans un porte-disque (7) transporté dans le dispositif de transport (10), la pince coulissante (20) de l'un ou l'autre chariot (21) passe sélectivement forcément dans une position d'engagement avec le porte-disque (7).

11. Appareil de lecture et/ou d'enregistrement et/ou de sortie pour des disques conformés en supports d'informations selon l'une des revendications 1 à 10, caractérisé en ce que les pinces coulissantes (20) sont coudées en sens contraire l'une par rapport à l'autre dans la zone avant, de manière qu'en cas de mouvement des chariots (21) se croisant en sens contraire, au cours duquel une griffe coulissante (20) se trouve toujours dans la position extraite et l'autre griffe coulissante (20) dans la position rentrée, les zones avant des griffes coulissantes (20) passent les unes devant les autres dans un plan et peuvent être amenées en engagement avec le porte-disque (7), dans le même plan.

12. Appareil de lecture et/ou d'enregistrement et/ou de sortie pour des disques conformés en supports d'informations selon l'une des revendications 1 à 11, caractérisé en ce que chaque chariot (21) s'engage, de manière mobile à glissement, par un ergot saillant (52), dans une rainure de guidage (53), qui est formée chaque fois dans un insert (54) d'un châssis (56) logé dans le bâti (55) ou le dispositif de transport (10), les rainures (59) opposées l'une à l'autre déterminant le même plan des griffes coulissantes (20).

13. Appareil de lecture et/ou d'enregistrement et/ou de sortie pour des disques conformés en supports d'informations selon l'une des revendications 1 à 12, caractérisé en ce que chaque fois un chariot (21) est monté sur l'une de deux barres de support (19), superposées dans un plan, et à l'extrémité des griffes coulissantes (20) du chariot supérieur et du chariot inférieur (21), est fixé chaque fois un tenon (58), guidé mobile à glissement dans un trou oblong (57) du chariot (21) correspondant, le tenon (58) de la griffe coulissante (20) du chariot supérieur (21) coopérant avec un rail de guidage supérieur réglable (59), ainsi qu'avec des rampes (60) disposées fixement à l'extrémité de celui-ci, et le tenon (58) de la griffe coulissante (20) du chariot inférieur (21) coopère avec un rail de guidage inférieur réglable (61), ainsi qu'avec des rampes (62) disposées fixement à l'extrémité de celui-ci.

14. Appareil de lecture et/ou d'enregistrement et/ou de sortie pour des disques conformés en supports d'informations selon l'une des revendications 1 à 13, caractérisé en ce que la rampe (60) associée sur le côté droit au rail de guidage supérieur (59), détermine la position d'attente de la griffe coulissante (20) du chariot supérieur (21) en vue de l'extraction d'un porte-disque (7) à partir du magasin à disques droit (4) et la rampe (62) associée sur le côté gauche au rail de guidage inférieur (61), détermine la position d'attente de la griffe coulissante (20) du chariot inférieur (21), en vue de l'extraction d'un porte-disque (7) à partir du magasin à disques gauche (4).

15. Appareil de lecture et/ou d'enregistrement et/ou de sortie pour des disques conformés en supports d'informations selon l'une des revendications 1 à 14, caractérisé en ce que la rampe (60) associée sur le côté gauche au rail de guidage supérieur (59) détermine la position de dispositif de transport (10) d'un porte-disque (7) extrait du magasin à disques (4) droit, dans le dispositif de transport et la rampe (62) associée sur le côté droit au rail de guidage inférieur (61) détermine la position de dispositif de transport d'un porte-disque (7) extrait du magasin à disques (4) gauche, dans le dispositif de transport (10).

16. Appareil de lecture et/ou d'enregistrement et/ou de sortie pour des disques conformés en supports d'informations selon l'une des revendications 1 à 15, caractérisé en ce que le rail de guidage supérieur (59) et le rail de guidage inférieur (61) sont déplaçables simultanément, parallèlement entre eux, par une tringlerie à levier (63) entraînée, de sorte que soit le rail de guidage supérieur ou inférieur (59, 61) dégage des fentes de passage (64) entre eux-mêmes et les rampes correspondantes (60 ou 62) pour le tenon (58) de la griffe coulissante (20) du chariot supérieur ou inférieur (21).

17. Appareil de lecture et/ou d'enregistrement et/ou de sortie pour des disques conformés en supports d'informations selon l'une des revendications 1 à 16, caractérisé en ce que la tringlerie à levier (63) reliée aux rails de guidage (59, 61) comprend un mécanisme à levier supérieur (65) relié au rail de guidage supérieur (59) et un mécanisme à levier inférieur (66) relié au rail de guidage inférieur (61), qui tous deux sont reliés à un levier de commutation commun (67), de manière que lors d'un actionnement du levier de commutation (67), les rails de guidage (59, 61) exécutent un mouvement parallèle limité en sens contraire.

18. Appareil de lecture et/ou d'enregistrement et/ou de sortie pour des disques conformés en supports d'informations selon l'une des revendications 1 à 17, caractérisé en ce que les fentes de passage (64) sont telles que, par guidage correspondant du tenon (58) de la griffe coulissante (20) du chariot (21) correspondant, en fonction du sens de déplacement du mécanisme à courroie (40) des chariots (21), elles font passer la griffe coulissante (20) dans une position d'engagement ou dans une position de non-engagement avec le porte-disque (7).

19. Appareil de lecture et/ou d'enregistrement et/ou de sortie pour des disques conformés en supports d'informations selon l'une des revendications 1 à 18, caractérisé en ce que dans la position d'engagement de la griffe coulissante (20) du chariot supérieur (21), lors d'un déplacement du mécanisme à courroie (40) des chariots (21), le tenon (58) de cette griffe coulissante (20) glisse le long du côté intérieur du rail de guidage supérieur (59) et en même temps le tenon (58) de la griffe coulissante (20), ne se trouvant pas en position d'engagement, du chariot inférieur (21), glisse le long du côté extérieur du rail de guidage inférieur (61).

20. Appareil de lecture et/ou d'enregistrement et/ou de sortie pour des disques conformés en supports d'informations selon l'une des revendications 1 à 19, caractérisé en ce que dans la position d'engagement de la griffe coulissante (20) du chariot inférieur (21), lors d'un déplacement du mécanisme à courroie (40) des chariots (21), le tenon (58) de cette griffe coulissante (20) glisse le long du côté intérieur du rail de guidage inférieur (61) et en même temps le tenon (58) de la griffe coulissante (20), ne se trouvant pas en position d'engagement, du chariot supérieur (21), glisse le long du côté extérieur du rail de guidage supérieur (59).

21. Appareil de lecture et/ou d'enregistrement et/ou de sortie pour des disques conformés en supports d'informations selon l'une des revendications 1 à 20, caractérisé en ce que le levier de commutation (67) est disposé solidairement en rotation et susceptible de coulisser sur l'autre tige de guidage (26a), également montée mobile en rotation, du dispositif de transport (10), cette tige de guidage (26a) pouvant être sollicitée dans différents sens de rotation, par l'intermédiaire d'un électro-aimant (74) et d'un ressort de rappel (72), qui coopèrent avec un anneau de serrage (69), disposé solidairement en rotation sur la tige de guidage (26a), ou par l'intermédiaire d'un moteur d'entraînement (82), à sens de rotation réversible.

22. Appareil de lecture et/ou d'enregistrement et/ou de sortie pour des disques conformés en supports d'informations selon l'une des revendications 1 à 21, caractérisé en ce qu'à la tige de guidage (26a) logeant le levier de commutation (67) sont associés des capteurs (76) pour surveiller des positions de fin de course des sens de rotation de la tige de guidage (26a).

23. Appareil de lecture et/ou d'enregistrement et/ou de sortie pour des disques conformés en supports d'informations selon l'une des revendications 1 à 22, caractérisé en ce que le boîtier (55) du dispositif de transport (10) comporte un bras de support (77), un rail de guidage (78) pour le porte-disque (7) étant formé dans les inserts (54), réalisés en matière plastique glissante, du châssis en métal (56), disposé dans le boîtier (55), et à ce rail de guidage (78) fait face, sur le côté extérieur, sur le bras de support (77), un autre rail de guidage (79) réalisé en matière plastique glissante, pour le porte-disque (7).

24. Appareil de lecture et/ou d'enregistrement et/ou de sortie pour des disques conformés en supports d'informations selon l'une des revendications 1 à 23, caractérisé en ce qu'au rail de guidage (79) côté extérieur du bras de support (77) est associé, au milieu, un élément à ressort (109), qui centre le porte-disque (7), par accrochage dans une entaille (110) correspondante du porte-disque (7) dans le dispositif de transport (10).

25. Appareil de lecture et/ou d'enregistrement et/ou de sortie pour des disques conformés en supports d'informations selon l'une des revendications 1 à 24, caractérisé en ce que l'actionnement des mécanismes de commande, se trouvant dans le dispositif de transport (10), pour les chariots (21) et les griffes coulissantes (20), s'effectue sans éléments électriques d'entraînement, à l'intérieur du dispositif de transport (10).

26. Appareil de lecture et/ou d'enregistrement et/ou de sortie pour des disques conformés en supports d'informations selon l'une des revendications 1 à 25, caractérisé en ce que chaque porte-disque (7) est positionné, par deux éléments à ressort (8) opposés, placés sur le magasin à disques (4), dans une position bloquée dans la case de réception (6), dans laquelle le porte-disque (7) peut être saisi par le dispositif d'extraction (9) correspondant du dispositif de transport (10), par un dégagement correspondant dans la paroi latérale du magasin à disques (4) correspondant.

27. Appareil de lecture et/ou d'enregistrement et/ou de sortie pour des disques conformés en supports d'informations selon l'une des revendications 1 à 26, caractérisé en ce que l'espace libre entre les porte-disques (7) dans chaque magasin à disques (4) est inférieur à l'épaisseur d'un disque (1).

28. Appareil de lecture et/ou d'enregistrement et/ou de sortie pour des disques conformés en supports d'informations selon l'une des revendications 1 à 27, caractérisé en ce que l'épaisseur de chaque porte-disque (7) n'est que légèrement supérieure à l'épaisseur d'un disque (1).

29. Appareil de lecture et/ou d'enregistrement et/ou de sortie pour des disques conformés en supports d'informations selon l'une des revendications 1 à 28, caractérisé en ce que le porte-disque (7) possède un évidement (22), sur chacun de ses côtés longitudinaux, dans la zone avant, et en ce que suivant la position du porte-disque (7) dans la case de réception (6) du magasin à disques (4) respectif ou dans le dispositif de transport (10), la griffe coulissante (20) du dispositif d'extraction (9) correspondant peut être amenée en engagement avec l'un de ces évidements (22).

30. Appareil de lecture et/ou d'enregistrement et/ou de sortie pour des disques conformés en supports d'informations selon l'une des revendications 1 à 29, caractérisé en ce que dans la paroi de fond (104) et la paroi de couverture (108) de chaque magasin à disques, sont prévues des entailles (105), qui sont alignées avec les évidements (22) correspondants des porte-disques (7), dans le magasin à disques (4).

31. Appareil de lecture et/ou d'enregistrement et/ou de sortie pour des disques conformés en supports d'informations selon l'une des revendications 1 à 30, caractérisé en ce que plusieurs platines (5) sont superposées, de manière interchangeable, dans l'axe vertical de l'un des magasins à disques (4).

32. Appareil de lecture et/ou d'enregistrement et/ou de sortie pour des disques conformés en supports d'informations selon l'une des revendications 1 à 31, caractérisé en ce qu'une platine (5) est disposée au-dessous du dispositif de transport (10).

33. Appareil de lecture et/ou d'enregistrement et/ou de sortie pour des disques conformés en supports d'informations selon l'une des revendications 1 à 32, caractérisé en ce qu'au-dessous du dispositif de transport (10) est disposée une platine (5) et dans l'axe vertical de l'un des magasins à disques (4) sont disposées plusieurs platines (5).

34. Appareil de lecture et/ou d'enregistrement et/ou de sortie pour des disques conformés en supports d'informations selon l'une des revendications 1 à 33, caractérisé en ce que l'un des magasins à disques (4) opposé est totalement remplacé par une tour de platines superposées (5).

35. Appareil de lecture et/ou d'enregistrement et/ou de sortie pour des disques conformés en supports d'informations selon l'une des revendications 1 à 34, caractérisé en ce que l'un des magasins à disques (4) se faisant face est totalement remplacé par une tour de platines superposées (5), et au-dessous du dispositif de transport (10) est disposée une autre platine (5).

36. Appareil de lecture et/ou d'enregistrement et/ou de sortie pour des disques conformés en supports d'informations selon l'une des revendications 1 à 35, caractérisé en ce que le tiroir de chargement/extraction de disque (11) est disposé, de manière interchangeable, dans l'axe vertical de l'un des magasins à disques (4), et à celui-ci est associée une fente d'introduction/extraction (12) pour un porte-disque (7) avec un disque (1), par l'intermédiaire du tiroir de chargement/extraction de disque (11), un porte-disque (7) avec le disque (1) étant transporté, au moyen du dispositif de transport (10), soit vers l'une des platines (5), soit vers une case de réception (6) libre, dans l'un des magasin à disques (4), ou un disque (1), se trouvant dans un magasin à disques (4) peut être échangé contre un autre disque (1).

37. Appareil de lecture et/ou d'enregistrement et/ou de sortie pour des disques conformés en supports d'informations selon l'une des revendications 1 à 36, caractérisé en ce que lors d'une extraction d'un disque (1) ou d'un échange d'un disque (1) contre un autre disque (1), au moyen du tiroir de chargement/extraction de disque (11), dans la position extraite du tiroir de chargement/extraction de disque, le porte-disque (7) reste forcément dans le tiroir de chargement/extraction de disque (11).

38. Appareil de lecture et/ou d'enregistrement et/ou de sortie pour des disques conformés en supports d'informations selon l'une des revendications 1 à 37, caractérisé en ce que le porte-disque (7) avec le disque (1) est disposé à l'intérieur d'une cassette (107), rangée dans la case de réception (6), agrandie en conséquence, du magasin à disques (4).

39. Appareil de lecture et/ou d'enregistrement et/ou de sortie pour des disques conformé en supports d'informations selon l'une des revendications 1 à 38, caractérisé en ce que plusieurs porte-disques (7) avec chaque fois un disque (1) correspondant sont logés à l'intérieur d'une cassette (108), qui est rangée dans une case de réception (6), agrandie en conséquence, du magasin à disques (4).

40. Appareil de lecture et/ou d'enregistrement et/ou de sortie pour des disques conformés en supports d'informations selon l'une des revendications 1 à 39, caractérisé en ce qu'à l'unité d'ordinateur interne est associée une mémoire intermédiaire (101) et un ordinateur externe est prévu, l'unité à ordinateur interne (13) commandant et surveillant le dispositif, gérant la mémoire intermédiaire (101) et assurant la communication avec l'ordinateur externe.

41. Appareil de lecture et/ou d'enregistrement et/ou de sortie pour des disques conformés en supports d'informations selon l'une des revendications 1 à 40, caractérisé en ce qu'au dispositif de transport (10) est associé d'un côté, uniquement un magasin à disques (4) et une platine (5) est disposée soit dans l'axe vertical de ce magasin à disques (4), soit au-dessous du dispositif de transport (10), un dispositif d'extraction (9), déplaçable horizontalement, étant uniquement prévu sur le dispositif de transport.

42. Appareil de lecture et/ou d'enregistrement et/ou de sortie pour des disques conformés en supports d'informations selon l'une des revendications 1 à 41, caractérisé en ce qu'au dispositif de transport (10) sont associés d'un côté plusieurs magasins à disques (4) superposés, plusieurs platines superposées et un tiroir de chargement/extraction de disque.
